(19) Europäisches Patentamt
European Patent Office
Office européen des brevets

(11) **EP 1 618 696 B1**

(12) **EUROPEAN PATENT SPECIFICATION**

(45) Date of publication and mention
of the grant of the patent:
**09.05.2007 Bulletin 2007/19**

(51) Int Cl.:
*H04L 7/04* (2006.01)      *H04L 7/10* (2006.01)
*H04L 27/00* (2006.01)      *H04L 27/26* (2006.01)

(21) Application number: **04724362.1**

(22) Date of filing: **30.03.2004**

(86) International application number:
**PCT/JP2004/004495**

(87) International publication number:
**WO 2004/088914 (14.10.2004 Gazette 2004/42)**

(54) **FREQUENCY SYNCHRONIZATION APPARATUS AND FREQUENCY SYNCHRONIZATION METHOD**

FREQUENZSYNCHRONISATIONSVORRICHTUNG UND FREQUENZSYNCHRONISATIONSVERFAHREN

APPAREIL DE SYNCHRONISATION DE FREQUENCE ET PROCEDE DE SYNCHRONISATION DE FREQUENCE

(84) Designated Contracting States:
**DE FR GB**

(30) Priority: **31.03.2003 JP 2003094926**

(43) Date of publication of application:
**25.01.2006 Bulletin 2006/04**

(73) Proprietor: **MATSUSHITA ELECTRIC INDUSTRIAL CO., LTD.**
**Kadoma-shi, Osaka 571-8501 (JP)**

(72) Inventors:
 • **OMOTO, Yukihiro**
   **Neyagawa-shi, Osaka 572-0055 (JP)**
 • **SHIRAKATA, Naganori**
   **Osaka 567-0833 (JP)**
 • **URABE, Yoshio**
   **Nara 630-0101 (JP)**
 • **HARADA, Yasuo,**
   **c/o Matsushita Ind. Co.Ltd IPROC**
   **Osaka 540-6319 (JP)**

(74) Representative: **Grünecker, Kinkeldey, Stockmair & Schwanhäusser Anwaltssozietät Maximilianstrasse 58 80538 München (DE)**

(56) References cited:
  **EP-A- 0 556 807        WO-A-99/53666**
  **US-A- 6 049 577**

• **KELLER T ET AL: "ORTHOGONAL FREQUENCY DIVISION MULTIPLEX SYNCHRONISATION TECHNIQUES FOR WIRELESS LOCAL AREA NETWORKS" 15 October 1996 (1996-10-15), IEEE INTERNATIONAL SYMPOSIUM ON PERSONAL, INDOOR AND MOBILE RADIO COMMUNICATIONS, XX, XX, PAGE(S) 963-967 , XP002063294 page 963, right-hand column, last paragraph - page 964, left-hand column, paragraph 1 page 964, right-hand column, paragraph 3; figures 2,3**
• **D'ARIA G ET AL: "SYNCHRONIZATION TECHNIQUES AND VITERBI EQUALIZERS FOR TDMA MOBILE RADIO" TECHNICAL REPORTS - CSELT, TURIN, IT, vol. 17, no. 2, 1 April 1989 (1989-04-01), pages 125-131, XP000575030 ISSN: 0393-2648**
• **MEHLAN R ET AL: "EFFICIENT PREAMBLE DESIGN FOR DIGITAL DMSK PACKET SYNCHRONIZATION" SERVING HUMANITY THROUGH COMMUNICATIONS. SUPERCOMM/ICC. NEW ORLEANS, MAY 1 - 5, 1994, INTERNATIONAL CONFERENCE ON COMMUNICATIONS (ICC), NEW YORK, IEEE, US, vol. VOL. 2, 1 May 1994 (1994-05-01), pages 918-922, XP000438640**

- MILLER M ET AL: "AN INNOVATIVE SYNCHRONIZATION PREAMBLE FOR UHF MILSATCOM" MILCOM 1999. IEEE MILITARY COMMUNICATIONS CONFERENCE PROCEEDINGS. ATLANTIC CITY, NJ, OCT 31 - NOV. 3, 1999, IEEE MILITARY COMMUNICATIONS CONFERENCE, NEW YORK, NY : IEEE, US, vol. VOL. 2 OF 2 CONF. 18, 31 October 1999 (1999-10-31), pages 1338-1342, XP000922185 ISBN: 0-7803-5539-3

**Description**

The present invention relates to a frequency synchronization apparatus and a frequency synchronization method, and in particular to a technique for simultaneously correcting shift in frequency and absolute phase in a reception signal, based on a single synchronization symbol.

In recent years numerous transmission methods have been developed for use in mobile communication, digital CATV (cable television) systems, and the like. In order for transmission to be performed correctly, it is necessary for a reception apparatus to establish synchronization between the frequency of a reception signal and an internal reception reference signal. This is because the reception apparatus will be unable to obtain the original transmission data correctly if it demodulates the reception signal without having established synchronization.

Frequency synchronization is generally performed using synchronization symbols that are transmitted incorporated in a signal. On receiving the signal, the reception apparatus detects an frequency error between the received signal and an internal reference signal expressing the same waveform as the synchronization symbol, based on a correlation between the signals, and corrects the reception signal according to the result of the detection

A technique of joined time and frequency synchronization in the OFDM framework is described in the article by T. Keller and L. Hanzo, "Orthogonal Frequency Division Multiplex Synchronization Techniques for Wireless Local Area Networks", IEEE International Symposium on Personal, Indoor and Mobile Radio Communications, 15 October 1996, pp. 963-967. The technique is based on a particular reference symbol. The reference symbol employed provides three hierarchical periodic time-domain structures. Synchronization is based on peak evaluation of two autocorrelation functions.

Conventional reception apparatuses that perform frequency synchronization using synchronization symbols are commonly known.

As one example, Japanese Laid Open Patent Application No. 2001-136149 discloses an OFDM (Orthogonal Frequency Division Multiplexing) reception apparatus that extracts a short preamble which is a synchronization symbol, from a reception signal, and corrects the carrier frequency of a receiver based on the extracted short preamble.

As a further example, Japanese Laid Open Patent Application No. 2002-511710 discloses a frequency coarse synchronization method of correcting the carrier frequency based on a cross correlation between an envelope obtained by demodulating a reception signal and a reference signal when the synchronization signal is expressed by a signal amplitude envelope, and correcting the carrier frequency based on an autocorrelation of the envelope when a waveform identical to the envelope occurs twice.

However, although they correct the frequency error of the reception signal, the conventional apparatus and method do not correct the absolute phase of the reception signal. This gives rise to a problem of an undesirable result being obtained by an apparatus at a later stage when the later-stage apparatus uses absolute phase as a reference to process the signal obtained by the conventional apparatus and method.

For example, if the later-stage apparatus is a demodulator that demodulates the signal with reference to absolute phase, an increased BER (bit error rate) occurs because the demodulator is unable to demodulate the signal correctly.

Furthermore, when synchronizing in two stages, i.e., coarse synchronization according to the conventional apparatus and method and fine synchronization according to the later-stage apparatus and method, if the later-stage apparatus is a synchronizer that has a function of correcting the absolute phase error, the time required by the later-stage apparatus to correct the absolute phase error increases as the absolute phase error increases.

Note that other related techniques included that in IEEE Standard 802.11a-1999, "High Speed Physical Layer in the 5 GHz Band", pages 12-13, which relates to OFDM wireless communication, and stipulates the two types of synchronization signals: STS (short training symbols) which are for frequency synchronization, and LTS (long training symbols) which are for absolute phase synchronization.

A reception apparatus that conforms to this standard performs a Fourier conversion of a time domain reception signal whose frequency has been corrected using STS, and further performs absolute phase correction of a frequency domain signal of each sub-carrier using LTS.

This related technique realizes highly accurate absolute phase correction of each sub-carrier, but is limited to being applied to OFDM, and gives rise to a problem that the actual transmission efficiency is reduced because it is necessary to transmit two types of synchronisation symbols.

Document EP-A-0 556 807 describes carrier recovery in the field of mobile satellite communication. In an input signal a carrier signal is modulated at a frame period by a data signal. Throughout the data signal, unique words are periodically interspersed. At first, the input signal is demodulated. On the basis of a cross-correlation coefficient between the demodulated input signal and a locally known unique word, a phase and a frequency error between a reproduced carrier signal (reproduced from the demodulated signal) and a regenerated carrier signal (a correct regeneration of the carrier signal) are obtained. Both the obtained phase and frequency errors are fed into a carrier regenerating circuit for correcting phase and frequency of the reproduced signal.

In order to solve the stated problems, the object of the present invention is to provide a frequency synchronisation apparatus and a frequency synchronization method that can be applied without depending on the modulation method, and that are able to simultaneously correct frequency error and absolute phase error in a reception signal using a single synchronization symbol.

This is achieved by the features of the independent claims. Further features and advantages of the present invention are the subject matter of dependent claims.

The frequency synchronization apparatus of the present invention estimates a frequency error between an input signal from an external source and a reference signal, based on a correlation therebetween, and corrects the input signal so as to cancel out the frequency error, the input signal including a synchronization symbol that is composed of a synchronization waveform that exhibits a predetermined autocorrelation property and is included at least twice in the synchronization symbol, and the reference signal expressing a waveform that is identical to the synchronization waveform, the frequency synchronization apparatus including: a correlation unit operable to successively find correlation vectors between the input signal and the reference signal; a timing detection unit operable to generate, based on chronological transition in magnitude of the obtained correlation vectors, a synchronization waveform timing signal that indicates a predetermined timing in each cycle of the synchronization waveform; a first frequency error detection unit operable to find a frequency error between the input signal and the reference, signal, based on an average phase difference between each pair of chronologically neighboring correlation vectors, each of which is obtained with the timing indicated by the synchronization waveform timing signal; an absolute phase error detection unit operable to find an absolute phase error between the input signal and the reference signal, based on chronological transition of absolute phase of correlation vectors found with the timing indicated by the synchronization waveform timing signal; and a first frequency correction unit operable to correct the input signal by simultaneously giving the input signal a frequency shift and a phase rotation that cancel out the found frequency error and the found absolute phase error.

According to the stated structures, the frequency synchronization apparatus, the frequency synchronization circuit, and the one-chip IC for frequency synchronization are able to simultaneously correct frequency error and absolute phase error in an input signal that includes the synchronization symbol, based on the synchronization symbol.

The synchronization symbol is a single signal that is composed of a signal waveform that exhibits the aforementioned autocorrelation property and occurs at least twice, and therefore loss in efficiency of transmitting the synchronization signal is low. Furthermore, since the processing performed by the compositional elements that relate to signal correction is all operations in a time series, complicated processing such as Fourier transformation is unnecessary, and the apparatus can be realized with a relatively simple overall structure. Furthermore, the stated structures can be applied without dependence on the modulation method.

Furthermore, the frequency synchronization apparatus may further include: a frequency error holding unit operable to hold the found frequency error, and, when a new frequency error is subsequently found, update the held frequency error with the new frequency error depending on a difference between the held frequency error and the new frequency error; and an absolute phase error holding unit operable to hold the found absolute phase error, and, when a new absolute phase error is subsequently found, update the held absolute phase error with the new absolute phase error depending on a difference between the held absolute phase error and the new absolute phase error, wherein the first frequency correction unit corrects the input signal by simultaneously giving the input signal a frequency shift and a phase rotation that cancel out the frequency error being held by the frequency error holding unit and the absolute phase error being held by the absolute phase error holding unit.

According to the stated structure, when there is not a great fluctuation in the frequency error or when there is not a great fluctuation in the absolute phase error, the frequency error or absolute phase error are maintained without updating, and the input signal is corrected based the maintained frequency error and absolute phase error. Therefore, the correction amount fluctuates relatively infrequently. For example, if an apparatus that follows the correction amount fluctuation of the frequency synchronization apparatus exists at latter stage than the frequency synchronization apparatus, the load on the latter-stage apparatus to follow the correction amount fluctuation is light.

Furthermore, the frequency synchronization apparatus may further include a second frequency correction unit operable to be supplied with a control signal, and give an output signal from the first frequency correction unit a frequency shift corresponding to the control signal; an absolute phase error detection unit operable to demodulate an output signal from the second frequency correction unit and successively find symbol points in the demodulated output signal, and detect a phase error between the found symbol points and symbol points able to be found in a modulation method of the output signal; and a second frequency error detection unit operable to successively output to the second frequency correction unit a control signal for giving an output signal from the first frequency correction unit a frequency shift that cancels out the detected phase error.

According to the stated structure, after the first frequency correction unit corrects the frequency error and absolute phase error of the input signal based on the synchronization symbol, the second frequency correction unit then corrects the frequency error of the input signal during the data symbol period, based on shift of the symbol points. Therefore, frequency fluctuations that occur in the data symbol period can also be finely corrected, and highly reliable communication can be realized.

Furthermore, in the frequency synchronization apparatus, the input signal may have been modulated according to a multicarrier modulation method, the phase error detection unit may demodulate an output signal from the second frequency correction unit and, for each sub-carrier in the demodulated output signal, successively find symbol points in the sub-carrier and detects phase error between the found symbol points and symbol points able to be obtained in a modulation method of the sub-carrier, the frequency synchronization apparatus may further include: a phase error averaging unit operable to average phase errors detected simultaneously for all or some of the sub-carriers, and the second frequency detection unit may successively output to the second frequency correction unit a control signal for giving an output signal from the first frequency correction unit a frequency shift that cancels out the average phase error.

The stated structure is particularly ideal for continuing to correct the frequency error of an input signal modulated according to a multicarrier modulation method in the data symbol period. Specifically, if tone noise is present in a specific sub-carrier, the effect of the noise is dispersed over all or some sub-carriers by averaging the phase error of all or some of the sub-carriers. This reduces the danger of mistakenly correcting all or some of the sub-carriers with information of the specific sub-carrier in which the noise is present.

Furthermore, in the frequency synchronization apparatus, the input signal may include a data symbol in addition to the synchronization symbol, and a band of the synchronisation symbol may be limited so as to fall within an occupied frequency band of the data symbol.

The stated structure ensures that the synchronization symbol will not effect a channel of a neighboring frequency.

Furthermore, in the frequency synchronization apparatus, the synchronization symbol may be characterized in that the synchronization waveform is included at least twice with a predetermined time interval therebetween.

Elimination of the high frequency component causes distortions at either end, in terms of time, of a synchronization waveform whose band has been limited. However, according to the stated structure, the synchronization waveform is repeated such that the distorted parts do no overlap. Therefore, the autocorrelation property of the synchronization symbol is maintained as much as possible.

The frequency synchronisation method of the present invention estimates a frequency error between an input signal from an external source and a reference signal, based on a correlation therebetween, and corrects the input signal so as to cancel out the frequency error, the input signal including a synchronization symbol that is composed of a synchronisation waveform that exhibits a predetermined autocorrelation property and is included at least twice in the synchronization symbol, and the reference signal expressing a waveform that is identical to the synchronization waveform, the frequency synchronization method including: a correlation step of successively finding correlation vectors between the input signal and the reference signal; a timing detection step of identifying, based on chronological transition in magnitude of the obtained correlation vectors, each cycle of the synchronization waveform; a first frequency error detection step of finding a frequency error between the input signal and the reference signal, based on an average phase difference between each pair of chronologically neighboring correlation vectors that are representative of the identified cycles; an absolute phase error detection step of finding an absolute phase error between the input signal and the reference signal, based on chronological transition of absolute phase of correlation vectors that are representative of the identified cycles; and a first frequency correction step of correcting the input signal by simultaneously giving the input signal a frequency shift and a phase rotation that cancel out the found frequency error and the found absolute phase error.

The frequency synchronisation method may further include : a frequency error recording step of recording the found frequency error, and, when a new frequency error is subsequently found, updating the recorded frequency error with the new frequency error depending on a difference between the recorded frequency error and the new frequency error; and an absolute phase error recording step of recording the found absolute phase error, and, when a new absolute phase error is subsequently found, updating the recorded absolute phase error with the new absolute phase error depending on a difference between the recorded absolute phase error and the new absolute phase error, wherein the first frequency correction step corrects the input signal by simultaneously giving the input signal a frequency shift and a phase rotation that cancel out the frequency error recorded in the frequency error holding step and the absolute phase error recorded in the absolute phase error recording step.

The frequency synchronization method may further include: a second frequency correction step of being instructed of a frequency shift, and giving a signal obtained in the first frequency correction step the instructed frequency shift; an absolute phase error detection step of demodulating a signal obtained in the second frequency correction step and successively finding symbol points in the demodulated output signal, and detecting a phase error between the found symbol points and symbol points able to be found in a modulation method of the output signal; and a second frequency error detection step of successively instructing to the second frequency correction step of a frequency shift that cancels out the detected phase error.

Here, the input signal may have been modulated according to a multicarrier modulation method, the phase error detection step may demodulate a signal obtained in the second frequency correction step and, for each sub-carrier in the demodulated output signal, successively finds symbol points in the sub-carrier and detects phase error between the found symbol points and symbol points able to be obtained in a modulation method of the sub-carrier, the frequency synchronization method may further include: a phase error averaging step of averaging phase errors detected simultaneously for all or some of the sub-carriers in the absolute phase error detection step, and the second frequency detection step may successively instruct the second frequency correction step of a frequency shift that cancels out the average phase error.

According to these methods, frequency synchronization can be executed with the aforementioned effects.

A synchronization symbol is obtained by repeating a synchronization waveform that has a high autocorrelation property and that is of a frequency range that falls within a desired band. Therefore, a synchronization symbol can be obtained that does not affect channels of neighboring frequencies, and that is suitable for the aforementioned frequency synchronization apparatus and frequency synchronization method.

In addition, if the synchronization waveform is repeated with a predetermined interval therebetween, the autocorrelation property of the synchronization symbol is maintained as much as possible for the aforementioned reasons.

FIG. 1 is a functional block diagram showing the overall structure of a frequency synchronization apparatus of the first embodiment;
FIG. 2 shows the configuration of a transmission frame;
FIG. 3 is a conceptual drawing for describing processing for detecting frequency error and absolute phase error;
FIG. 4 is a functional block diagram showing the detailed structure of a correlation estimator;
FIG. 5 is a functional block diagram showing the detailed structure of a timing detector;
FIG. 6 is a functional block diagram showing the detailed structure of a first frequency error detector;
FIG. 7 is a functional block diagram showing the detailed structure of an absolute phase error detector;
FIG. 8 is a functional block diagram showing the detailed structure of a first frequency corrector;
FIG. 9 is a graph showing chronological transition (convergence speed) of absolute phase error;
FIG. 10 is a functional block diagram showing the overall structure of a frequency synchronisation apparatus of the second embodiment;
FIG. 11 is a functional block diagram showing the overall structure of a frequency synchronisation apparatus of the third embodiment;
FIG. 12 is a graph showing chronological transition (convergence speed) of absolute phase error;
FIG. 13 is a functional block diagram showing an example of a modification of a second frequency synchronizer;
FIG. 14 shows the detailed configuration of a synchronization waveform;
FIG. 15 is a graph showing autocorrelation property of a synchronization waveform;
FIG. 16 is a graph showing the spectrum of the synchronization waveform; and
FIG. 17 is a time chart showing chronological arrangement of synchronization waveforms that compose a synchronization symbol.

The frequency synchronization apparatus of the present invention synchronizes frequency and absolute phase of an input signal that is supplied by a higher apparatus and that includes a synchronization symbol in which a synchronization waveform that exhibits a strong autocorrelation property occurs at least twice. Here, the frequency synchronization apparatus synchronizes the input signal with an internal reference signal that expresses a waveform that is the same as the synchronization waveform. The frequency synchronisation apparatus then outputs the synchronized input signal to the higher apparatus.

For simplicity, the higher apparatus is described as being a wireless reception apparatus, for example, and the frequency synchronization apparatus is supplied with a reception signal (a reception signal in a broad sense including orthogonal component signals included in the reception signal) from the wireless reception apparatus, and synchronizes the frequency and absolute phase of the reception signal with the reference signal.

<First Embodiment>

The following describes a frequency synchronization apparatus of a first embodiment with reference to the drawings.

<Overall Structure>

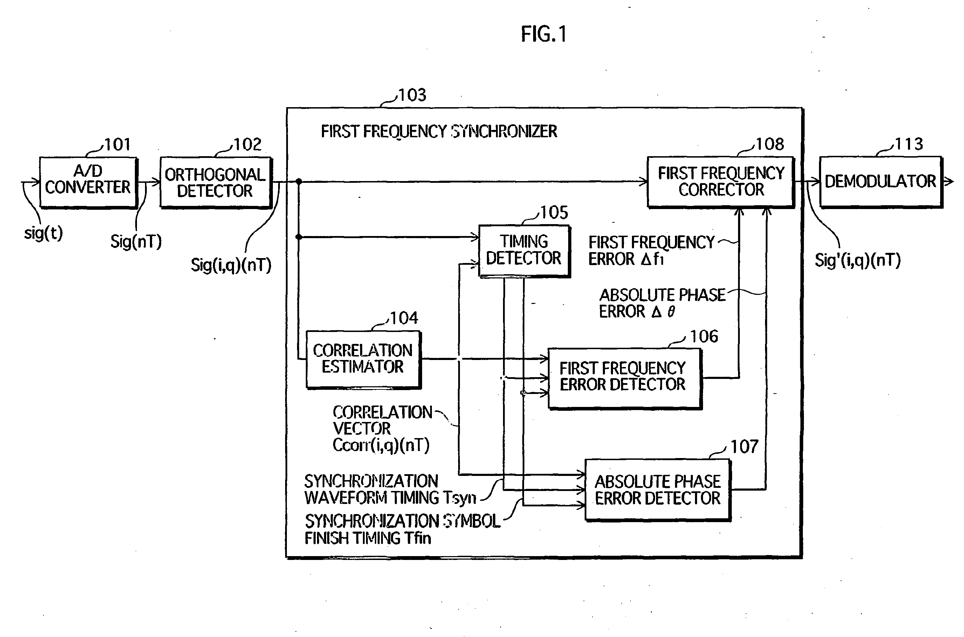

FIG. 1 is a functional block diagram showing the overall structure of the frequency synchronization apparatus of the first embodiment, together with part of the wireless reception apparatus that is the higher apparatus. In FIG. 1, a first frequency synchronizer 103 corresponds to the frequency synchronisation apparatus, and an A/D (analog/digital) converter 101, an orthogonal detector 102, and a demodulator 113 correspond to part of the wireless reception apparatus.

The reception signal is converted to a signal sig(t) of an intermediate frequency selected appropriately by a tuner (not illustrated) in the wireless reception apparatus. The A/D converter 101 converts the signal sig(t) to a time series digital signal Sig(nT), and the orthogonal detector 102 obtains a baseband orthogonal component signal Sig(i,q)(nT) by performing orthogonal detection of the digital signal Sig(nT). Hereinafter, the orthogonal component signal Sig (i,q)(nT) is simply referred to as a reception signal, depending on the context.

The first frequency detector 103 is supplied with the reception signal Sig(i,q) (nT), synchronizes the frequency and absolute phase therepf with a reference signal generated by a correlation estimator 104, and outputs the synchronized signal Sig' (i,q) (nT) to the demodulator 113.

The demodulator 113 restores the original transmitted data by demodulating the signal Sig' (i,q)(nT).

The first frequency synchronizer 103 may be realized by, for example, a DSP (digital signal processor) and a ROM (read only memory) and the like, and may achieve its functions by the DSP executing a program recorded in the ROM. In such a case, the blocks in the first frequency synchronizer 103 correspond to program modules for realizing the functions of the first frequency synchroniser 103.

Alternatively, the first frequency synchronizer 103 may be realized by, for example, digital circuits that correspond to the functions of the blocks, or may be realized by a one-chip IC (integrated circuit) in which the circuits are formed. Such a one-chip IC includes an input terminal for obtaining a signal supplied from an external source, and an output terminal for outputting a signal whose frequency has been synchronized to an external source.

<Reception signal>

The wireless reception apparatus receives a signal that is expressed by chronologically repeating transmission frames that are the unit by which the signal is transmitted.

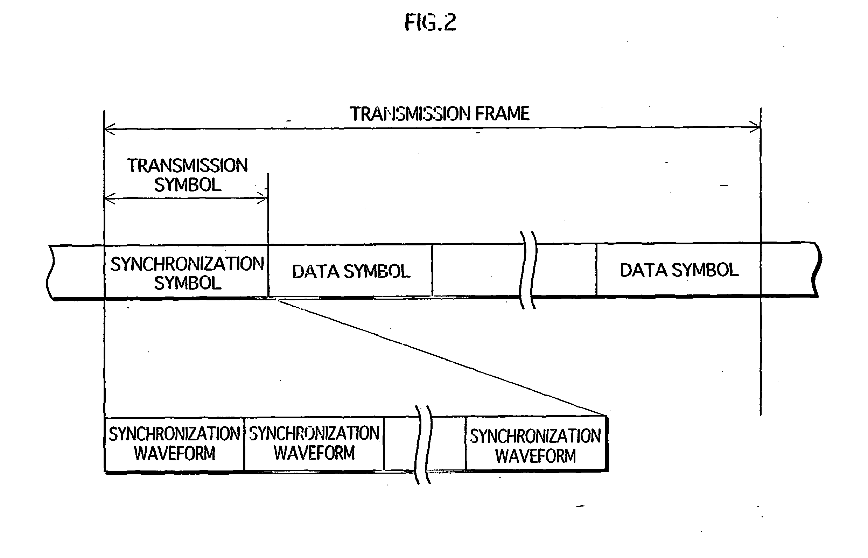

FIG. 2 is a format diagram showing the configuration of a transmission frame. The transmission frame is composed of a plurality of transmission symbols, the top transmission symbol being a synchronization symbol used for frequency synchronization, and data symbols that express actual information follow the synchronization symbol.

The synchronization symbol is a signal in which a synchronization waveform (for example, a chirp signal, a PN (pseudorandom noise) sequence or the like) exhibiting a strong autocorrelation property occurs at least twice. The synchronization symbol may be incorporated at predetermined intervals through the transmission frame instead of being at the top of the transmission frame. A signal in which each transmission frame includes a plurality of synchronization symbols can be received more accurately because frequency synchronization can be re-established each time the synchronization symbol is detected.

The method used for generating the synchronization waveform and the synchronization symbol is described in detail later.

<First frequency synchronizer 103>

Returning to FIG. 1, the first frequency synchronizer 103 has a correlation estimator 104, a timing detector 105, a first frequency error detector 106, an absolute phase error detector 107 and a first frequency corrector 108.

The correlation estimator 104 generates a reference signal that expresses a waveform that is the same as that in the synchronization symbol, and calculates a time series of correlation vectors Ccorr(i,q)(nT) of the reception signal Sig(i,q)(nT) and the reference signal. The timing detector 105 outputs a synchronization waveform timing signal Tsyn and a synchronisation symbol finish timing signal Tfin. The synchronization waveform timing signal Tsyn indicates when the magnitude of the correlation vector exceeds a predetermined threshold (hereinafter, this is called "peak timing") in each cycle of the synchronization waveform in the reception signal based on the correlation vector time transition. The synchronization symbol finish timing signal Tfin indicates when the synchronization symbol finishes. The first frequency error detector 106 estimates a frequency error $\measuredangle$ f1 at the synchronization symbol finishing timing of the reception signal and the reference signal, based on an average phase difference between each chronologically adjacent pair of correlation vectors obtained at each peak timing. The absolute phase error detector 107 finds an absolute phase error $\measuredangle$ θ at the synchronization symbol finish timing of the reception signal and the reference signal, based on the chronological transition of the absolute phase of the correlation vector obtained at each peak timing. The first frequency corrector 108 obtains a corrected reception signal sig'(i,q)(nT) by simultaneously giving the reception signal a frequency shift and a phase rotation that cancel out the obtained frequency error $\measuredangle$ f1 and absolute phase error $\measuredangle$ θ. The first frequency corrector 108 then outputs the corrected reception signal sig'(i,q)(nT) to the demodulator 113.

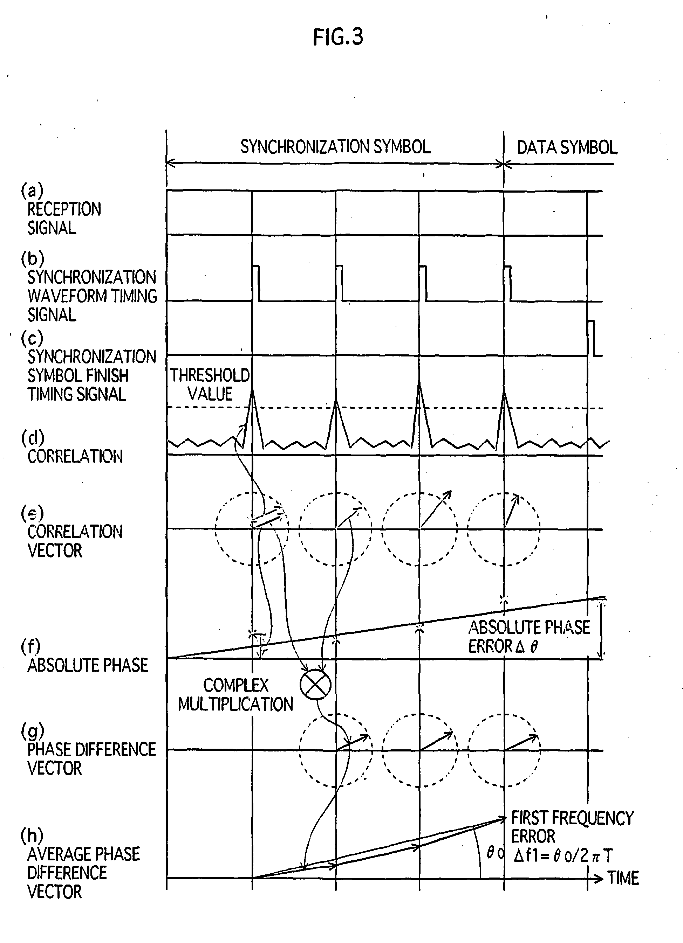

FIG. 3 is a conceptual drawing for describing the above signal processing, and shows principal signal contents schematically. The following describes details of the structure of each component of the first frequency synchronizer 103 and the signal processing performed by the components.

<Correlation estimator 104>

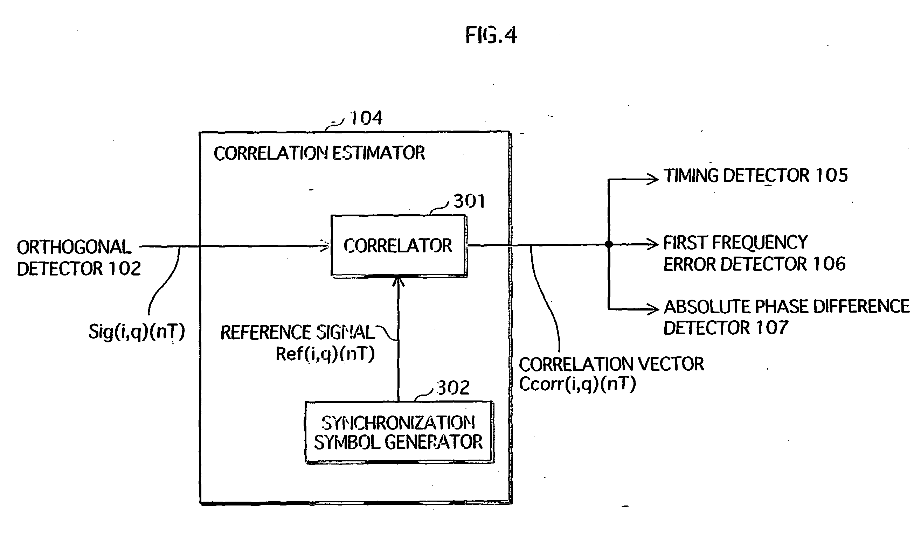

FIG. 4 is a functional block diagram showing the detailed structure of the correlation estimator 104. The correlation estimator 104 has a correlator 301 and a synchronization symbol generator 302.

The symbol generator 302 generates a reference signal Ref (i, q) (nT) that expresses a waveform the same as that in the synchronization symbol. The synchronization symbol generator 302 is realized with use of a memory circuit, for example. Specifically, the synchronization symbol generator 302 may hold, in advance, time series sampling values indicating the synchronization waveform, in a memory circuit (not illustrated), and generate the synchronization symbol by repeatedly reading the sampling values.

The correlator 301 calculates correlation vectors Ccorr(i,q)(nT) between the reception signal Sig(i,q)(nT) and the reference signal Ref(i,q)(nT) (FIG. 3(e)). These are calculated according to Equation 1.

$$Ccorr_{(i,q)}(nT) = \sum_{k}^{L} \{Sig_{(i,q)}((n-k)T) \cdot Ref_{(i,q)}(k)\} \qquad (1)$$

L: sample count of one cycle of synchronisation waveform in reference signal

<Timing detector 105>

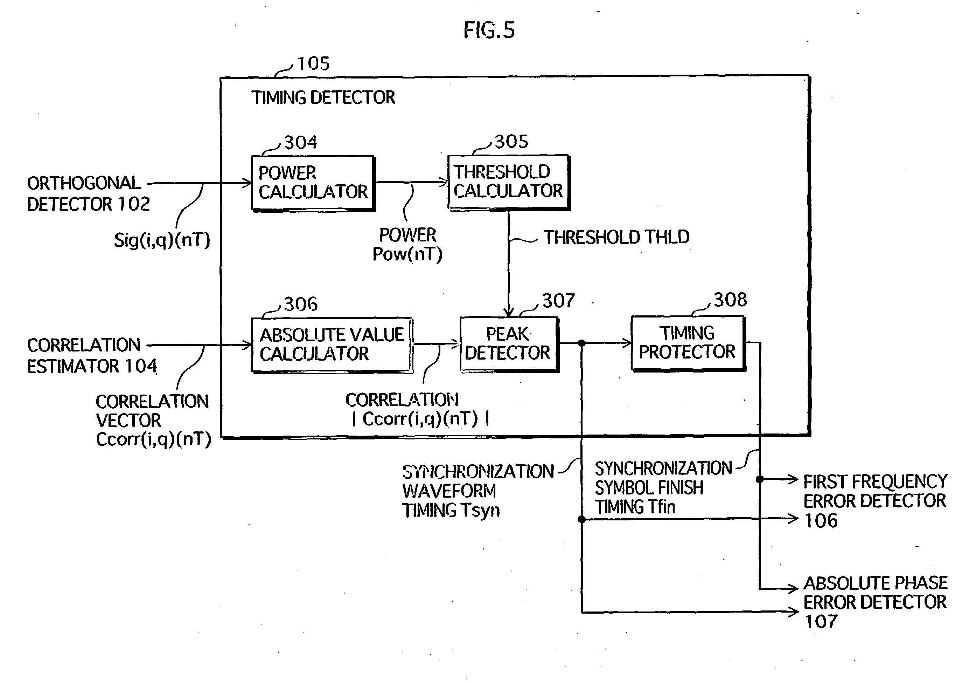

FIG. 5 is a functional block drawing showing the detailed structure of the timing detector 105. The timing detector 105 has a power calculator 304, a threshold calculator 305, an absolute value calculator 306, a peak detector 307, and a timing protector 308.

The absolute value calculator 306 finds a correlation |Ccorr (i,q) (nT)| of the correlation vectors Ccorr(i,q)(nT) (FIG. 3 (d)) . This correlation can be found as, for example, the square of the i, q component, the absolute value of correlation vectors, or the absolute value total of the i,q component.

The peak detector 307 outputs a synchronization waveform timing signal Tsyn that indicates timing when the correlation |Ccorr(i,q)(nT) | exceeds a threshold value THLD that is used as a reference for judgment (FIG. 3(b)).

Since a waveform exhibiting a strong autocorrelation property is used, the correlation peak appears once in each cycle of the synchronization waveform in the reception signal. In other words, the cycles of the synchronization waveform in the reception signal can be identified by the peaks.

The threshold value THLD is set by the threshold value calculator 305 according to the signal power Pow(nT) of the reception signal Sig (i,q) (nT) calculated by the power calculator 304. The threshold calculator 305 setting the threshold value according to the power of the reception signal enables the peak detector 307 to detect the peak appropriately by tracking fluctuation in transmission path properties. The threshold calculator 305 may set the threshold value according to an average transition of the signal power over a predetermined period of time.

When a peak timing has been shown by the synchronization waveform timing signal Tsyn and a new peak timing is not shown for a subsequent predetermined period of time (for example, a sample count L of one cycle of the synchronization waveform in the reference signal), the timing protector 308 outputs a synchronization symbol finish timing signal Tf in indicating that the synchronization symbol has finished (FIG. 3(c)).

<First frequency error detector 106>

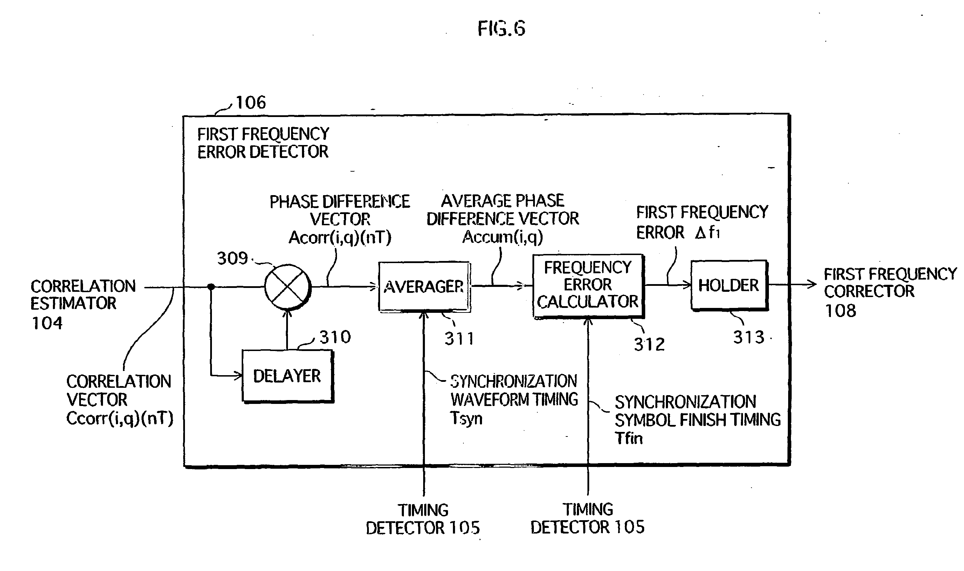

FIG. 6 is a functional block diagram showing the detailed structure of the first frequency error detector 106. The first frequency error detector 106 has a multiplier 309, a delayer 310, an averager 311, a frequency error calculator 312, and a holder 313.

The multiplier 309 finds a phase difference vector Acorr(i,q)(nT) that indicates a difference in phase between a correlation vector Ccorr(i,q)(nT) and a correlation vector Ccorr(i,q)((n-D)T) delayed a predetermined sample count D by the delayer 309, by multiplying a complex conjugate of the phase vector Ccorr(i,q)(nT) and the delayed correlation vector Ccorr(i,q)((n-D)T) (FIG. 3(g)).

By using the sample count D as the sample count L of one cycle of the synchronization frequency in the reference signal, a phase difference vector can be obtained that indicates how much the phase error between the reception signal and the reference signal has changed between two synchronization waveforms.

The averager 311 finds an average phase difference vector Accum(i, q) by totaling the phase difference vectors (FIG. 3(h)). The frequency error calculator 312 calculates an average phase difference vector direction as a phase error average θ, and finds a first frequency error $\angle$f1 from the phase error average θ. These are calculated according to Equation 2 and Equation 3.

$$Accum_{(i,q)} = \sum Acorr_{(i,q)} \qquad (2)$$

$$\theta = \tan^{-1} \frac{Accum_{(q)}}{Accum_{(i)}}, \quad \Delta f_1 = \frac{\theta}{2\pi T} \qquad (3)$$

The averager 311 may find the average phase difference vector by totaling only the phase vectors obtained at the peak timing shown by the synchronization waveform timing signal Tsyn. This is because the correlation, at the peak timing is greater than the correlation at other times, and therefore, in reality the phase vector at the peak timing affects the average value. Furthermore, a waveform having a long cycle may be used in order to increase resolution of the obtained phase error.

The frequency error calculator 312 outputs the first frequency error $\angle$ f1 obtained with the timing indicated by the synchronization symbol finish timing signal Tfin to the holder 313, and the holder 313 holds the first frequency error $\angle$ f1 supplied by the frequency error calculator 312. In this way, the frequency error obtained from the synchronization symbols is used in frequency correction of the subsequent data symbols.

<Absolute phase error detector 107>

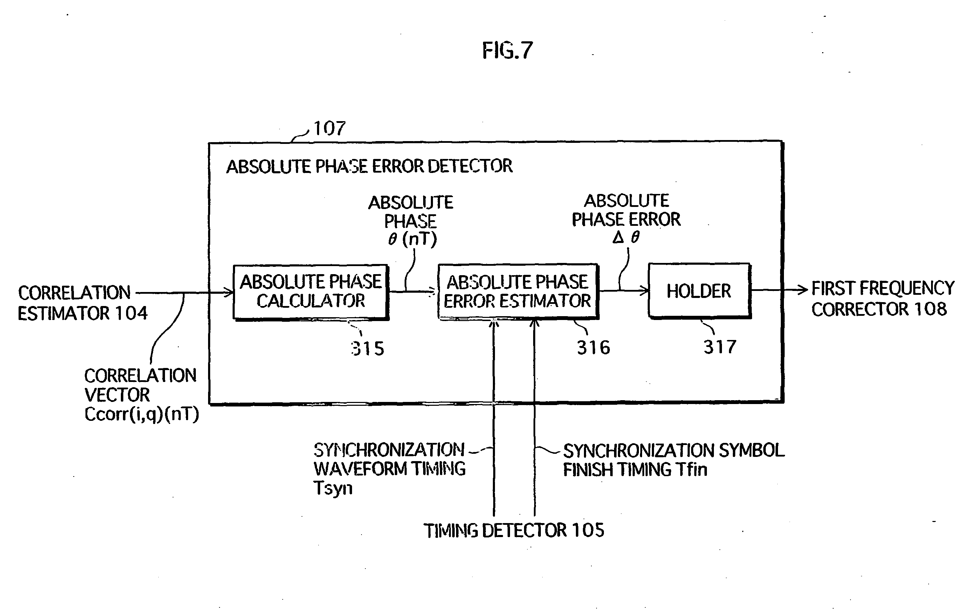

FIG. 7 is a functional block diagram showing the detailed structure of the absolute phase error detector 107. The absolute phase error detector 107 has an absolute phase calculator 315, an absolute phase error estimator 316, and a holder 317.

The absolute phase calculator 315 calculates a correlation vector Ccorr(i,q)(nT) direction as an absolute phase $\theta$ (nT) of the reception signal and the reference signal.

The absolute phase error estimator 316 holds a time of each peak timing indicated by the synchronization waveform timing signal Tsyn, in correspondence with the absolute phase, and estimates an absolute phase time transition based on the time and absolute phase held up to the time of estimation. Specifically, the absolute phase error estimator 316 may, for example, use a method of least squares to find an approximate straight line expressing the relationship between time and absolute phase. The absolute phase error estimator 316 then finds the absolute phase at the timing on the approximate straight line indicated by the synchronization symbol finish timing signal Tfin, as the absolute phase error $\angle$ $\theta$ (FIG. 3(f)).

The holder 317 holds the absolute phase error $\angle$ $\theta$ obtained by the absolute phase error estimator 316. In this way, the absolute phase error obtained from the synchronization symbols is used in absolute phase correction of the subsequent data symbols.

<First frequency corrector 108>

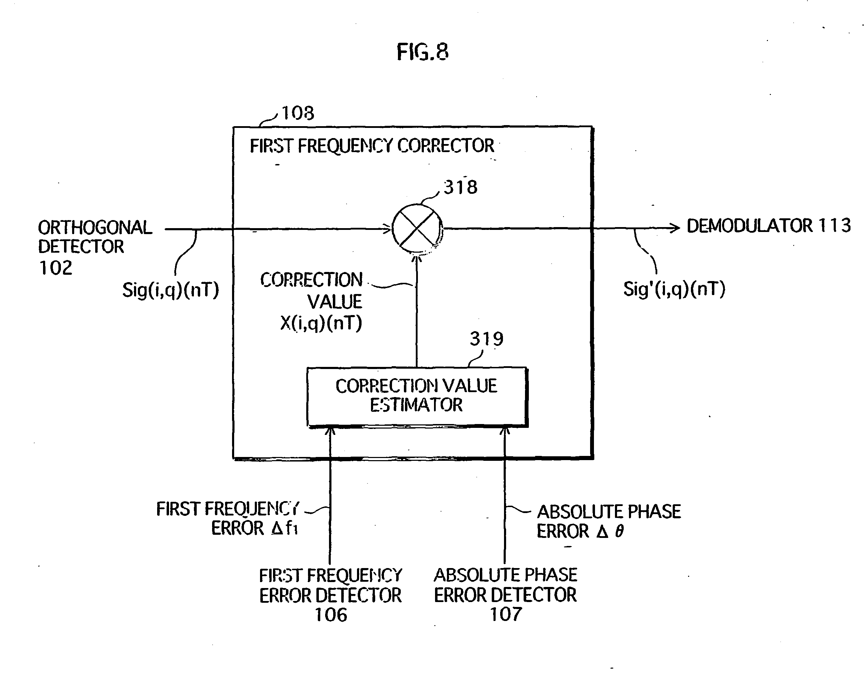

FIG. 8 is a functional block drawing showing the detailed structure of the first frequency corrector 108. The first frequency corrector 108 has a multiplier 318 and a correction value calculator 319.

The correction value calculator 319 generates a complex sine wave X(i,q)(nT) for giving a frequency shift and phase rotation that cancel the first frequency error $\angle$ f1 and the absolute phase error $\angle$ $\theta$ to the reception signal Sig(i,q) (nT).

The multiplier 318 simultaneously corrects the frequency and absolute phase of the reception signal by performing a complex multiplication of the reception signal and the complex sine wave, and outputs the corrected reception signal Sig'(i,q)(nT).

<Absolute phase error transition>

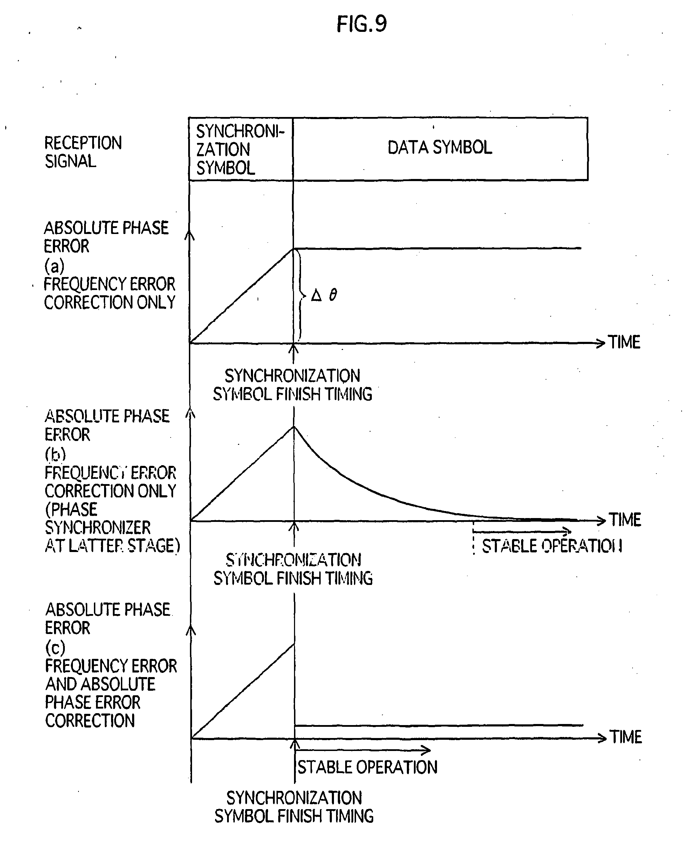

FIG. 9 is a graph showing chronological transition (convergence speed) of absolute phase error of each of a reception signal corrected by the conventional frequency synchronisation apparatus and a reception signal corrected by the frequency synchronization apparatus of the first embodiment with the reference signal.

FIG. 9(a) shows transition of the absolute phase error of the signal obtained by the conventional technique of correcting the frequency error only. According to the conventional technique, only the frequency error is corrected in the synchronization symbol period, and therefore fluctuations in phase are not exhibited in the data symbol period, but the absolute phase error is fixed at an irregular position.

FIG. 9(b) shows transition of the absolute phase error of the signal obtained by a latter-stage synchronizer correcting the absolute phase difference of the signal in (a). Here, the greater the absolute phase error at the synchronization symbol finish point, the greater the amount of time required for the synchronizer to correct the absolute phase error and converge the absolute phase error into a stable operational range. The resulting loss in time leads to a deterioration of transmission efficiency. If the convergence time is excessively reduced in order to alleviate the deterioration of transmission efficiency, a different problem may arise that an apparatus at yet a latter stage will be unable to follow the resulting drastic fluctuations in phase. Consequently, there is a limit to how much the convergence time can be reduced.

FIG. 9(c) shows transition of the absolute phase error of a signal obtained according to the frequency synchronization apparatus of the first embodiment. Since the absolute phase of the subsequent data symbols is corrected according to the absolute phase error estimated in the synchronization symbol period, the absolute phase error is extremely low from the start of the data symbol period, and is kept approximately the estimated error value of the frequency and absolute phase.

<Summary of the first embodiment>

As has been described, according to the frequency synchronization apparatus of the first embodiment of the present invention, frequency error and absolute phase error of a signal are able to be simultaneously corrected using a predetermined symbol.

Since a single signal in which a signal waveform that exhibits a high autocorrelation property occurs at least twice is used as the predetermined symbol, loss in efficiency that occurs in transmission of the synchronization symbol can be reduced. Furthermore, since all processing relating to signal correction can be performed in time series, the frequency synchronization apparatus can be realized with a relatively simple structure, and is not limited to being applied to a specific transmission method such as OFDM.

Note that a frequency synchronization method that includes steps that correspond to the processing performed by the blocks of the first frequency synchronizer 103 is also included in the present invention.

<Second Embodiment>

The frequency synchronization apparatus of the second embodiment differs from the frequency synchronization apparatus of the first embodiment in that it has added holders that hold the first frequency error $\triangle f1$ and the absolute phase error $\triangle \theta$, and it corrects the reception signal according to the first frequency error $\triangle f1$ and the absolute phase error $\triangle \theta$ held by the holders.

The following describes the frequency synchronization apparatus of the second embodiment with reference to the drawings. Note that structural elements that are the same as in the first embodiment have the same reference numbers thereas, and are omitted from the following description.

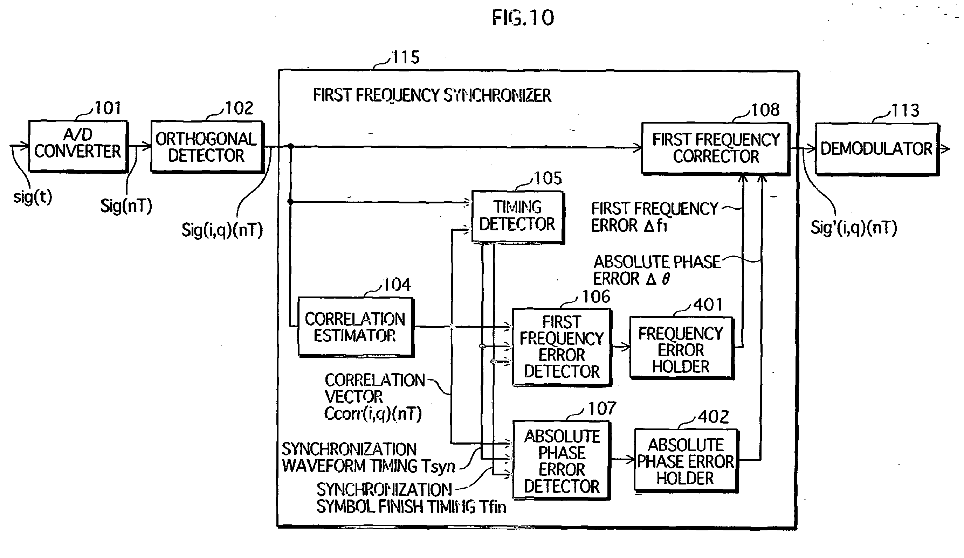

FIG. 10 is a functional block diagram showing the overall structure of the frequency synchronization apparatus of the second embodiment, together with part of the wireless reception apparatus that is the higher apparatus. In FIG. 10, a first frequency synchronizer 115 corresponds to the frequency synchronization apparatus of the second embodiment. In addition to the structure of the first frequency synchronizer 103 in the first embodiment (see FIG. 1), the first frequency synchronizer 115 has a frequency error holder 401 and an absolute phase error holder 402.

The frequency error holder 401 holds the first frequency error $\triangle f1$ obtained by the first frequency error detector 106, and when a new frequency error is subsequently obtained, updates the held frequency error with the new frequency error if an absolute value of a difference between the held frequency error and the new frequency error is greater than a predetermined threshold value, and ignores the new frequency error and continues to hold the previous frequency error if the absolute value is not greater than the predetermined threshold value.

The absolute phase error holder 402 holds the absolute phase error $\triangle \theta$ obtained by the absolute phase error detector 107, and when a new absolute phase error is obtained, updates the held absolute phase error with the new absolute phase error if an absolute value of a difference between the held absolute phase error and the new absolute phase error is greater than a predetermined threshold value, and ignores the new absolute phase error and continues to hold the previous absolute phase error if the absolute value is not greater than the predetermined threshold value.

The first frequency corrector 108 is modified so as to be supplied with the frequency error held by the frequency error holder 401 and the absolute phase error held by the absolute phase error holder 402. The first frequency corrector 108 corrects the reception signal by simultaneously giving the reception signal a frequency shift and phase rotation that cancel out the frequency error and the absolute phase error, as described in the first embodiment.

In the first frequency synchronizer 103, the correction amount of the reception signal is updated each synchronization symbol with a newly calculated frequency error and absolute phase error, but in the first frequency synchronizer 115, according to the stated structure, the correction value of the reception signal is only updated with the frequency error and the absolute phase error when the transmission path properties fluctuate to a relatively large extent.

<Summary of the Second Embodiment>

As has been described, according to the frequency synchronization apparatus of the second embodiment of the present invention, the correction value is limited to being updated as few times as practical.

The present frequency synchronisation apparatus is ideal for use in a two-stage structure in which the present frequency apparatus performs coarse synchronization and a synchronizer provided at a latter stage performs fine synchronization. Although a problem occurs in such a structure of a loss in efficiency for the latter-stage synchroniser to re-establish fine synchronization each time the present frequency synchronization apparatus updates the correction value, this loss is alleviated because the number of times that the present frequency synchronization apparatus updates the correction value is limited to as few as practical.

The present frequency synchronization apparatus is also ideal for processing transmission frames in which synchronization symbols are incorporated at predetermined intervals. In this case, while being given numerous opportunities to obtain an appropriate correction value, the present frequency synchronization apparatus updates the correction value as few times as possible, and therefore is able to both maintain a high degree of accuracy in synchronization and reduce the loss in fine synchronization.

Note that a frequency synchronization method that includes steps that correspond to the processing performed by the blocks in the first frequency synchronizer 115 is included in the present invention.

<Third Embodiment>

The frequency synchronization apparatus of the third embodiment differs from the frequency synchronization apparatus of the second embodiment in that it additionally includes a second frequency synchronizer that performs frequency synchronization in compliance with a modulation method. The second frequency synchronizer corrects the frequency error of the reception signal by, for example, finding a time series of information symbols by demodulating the reception signal, and detecting an amount of shift of a symbol point either every one or plurality of symbols .

The following describes the frequency synchronization apparatus of the third embodiment with reference to the drawings. Note that structural elements that are the same as in the second embodiment have the same reference numbers thereas, and are omitted from the following description.

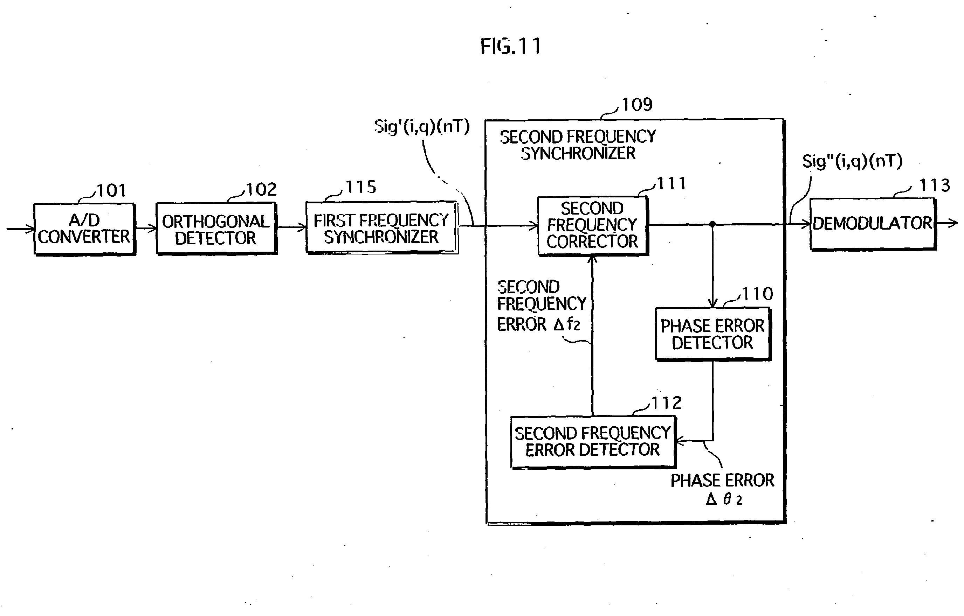

FIG. 11 is a functional block diagram showing the overall structure of the frequency synchronization apparatus of the third embodiment, together with part of the wireless reception apparatus that is the higher apparatus. In FIG. 11, the first frequency synchronizer 115 and a second frequency synchronizer 109 correspond to the frequency synchronization apparatus of the third embodiment.

The second frequency synchronizer 109 has a second frequency corrector 111, a phase error detector 110, and a second frequency error detector 112.

The second frequency corrector 111 gives the reception signal Sig'(i,q)(nT) corrected by the first frequency synchronizer 115 a frequency shift that cancels out a second frequency error $\triangle f2$ notified by the second frequency error detector 112, and thereby obtains a further corrected reception signal Sig''(i, q) (nT) which it outputs to the demodulator 113.

The phase error detector 110 demodulates the corrected reception signal Sig''(i,q)(nT) into an information signal, and, for each one or plurality of information symbols, detects a phase error $\triangle \theta2$ between a symbol point expressed by the obtained information signal and a symbol point closest in the symbol points able to be obtained according to the modulation method.

The second frequency error detector 112 notifies the second frequency corrector 111 of the second frequency error $\triangle f2$, which corresponds to the phase error $\triangle \theta2$.

<Absolute phase error transition>

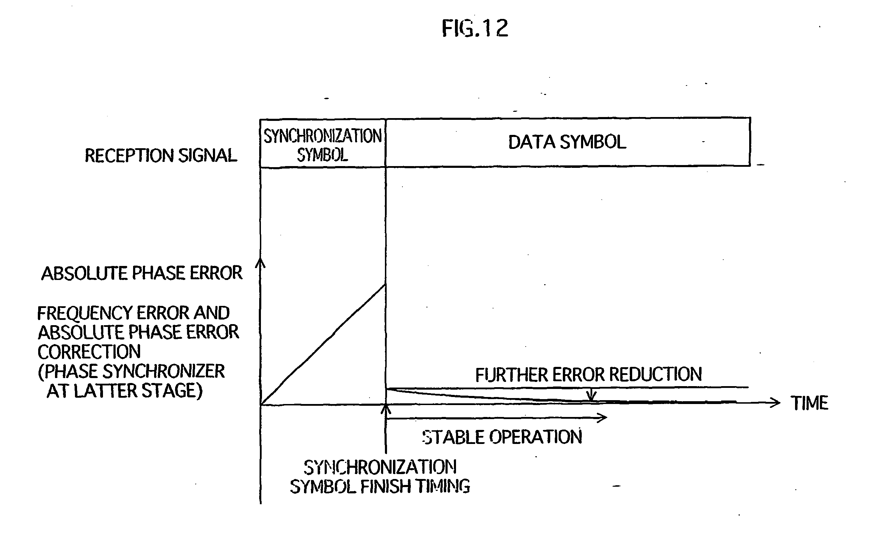

FIG. 12 is a graph showing chronological transition (convergence speed) of the absolute phase error between a signal obtained from the frequency synchronization apparatus of the third embodiment and the reference signal. Compared to FIG. 9(c), the absolute phase error is reduced even after the data symbol period starts due to the action of the second frequency synchronizer, and synchronization is realized with even greater accuracy.

Furthermore, since the absolute phase error is extremely low from the start of the data symbol period, if the absolute phase error was to deviate from the stable operational range at the start of the data symbol period, the amount of deviation would be minimal, and the time required to bring the phase error back into the stable operational rate would be extremely short compared to FIG. 9(b).

<Summary of the Third Embodiment>

As has been described, according to the frequency synchronization apparatus of the third embodiment of the present invention, the first frequency synchronizer 115 finds the frequency error and the absolute phase error for each synchronization symbol, and corrects the reception signal to cancel out the frequency error and the absolute phase error. The second frequency synchronizer 109 finds the frequency error every information symbol or every plurality of information symbols using knowledge of the modulation method, and further corrects the corrected reception signal to cancel out the frequency error. Therefore, frequency fluctuations that occur in the data symbol period according to variations in transmission properties are corrected finely, and highly reliable communication is achieved.

Note that the described effects may be obtained by a structure obtained from a combination of the first frequency synchroniser 103 described in the first embodiment and the second frequency synchronizer 109 described in the second embodiment. Such a structure is also included in the present invention.

Furthermore, a frequency synchronization method that includes steps that correspond to the processing performed by the blocks of the first frequency synchronizer 115 and the second frequency synchronizer 109, and a frequency synchronization method that includes steps that correspond to the processing performed by the blocks of the first frequency synchronizer 103 and the second frequency synchronizer 109 are included in the present invention.

<Second frequency synchronizer modification example>

One example of a modification of the second frequency synchronizer is a structure by which frequency synchronization is adapted to a multicarrier modulation method.

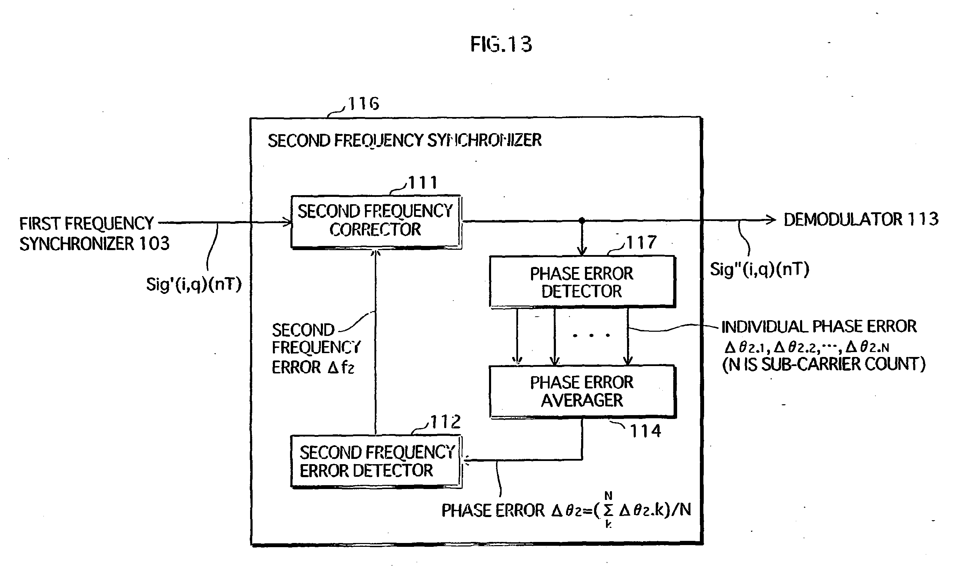

FIG. 13 is a functional block diagram showing the detailed structure of the second frequency synchronizer 116 of the modification example. Here, reception signals Sig'(i,q)(nT) and Sig" (i,q)(nT) are signals that have been modulated by a multicarrier modulation method. The second frequency synchronizer 116 differs from the second frequency synchronizer 109 in that it has a phase error detector 117 and a phase error averager 114 that conform to the multicarrier modulation method, instead of the phase error detector 110.

The phase error detector 117 demodulates each sub-carrier of the reception signal Sig''(i,q)(nT) that has corrected by the second frequency corrector 111 into information signals, and detects, for each sub-carrier, phase error $\angle \theta 2.1$, $\angle \theta 2.2$, through to $\angle \theta 2.N$ between a symbol point expressed by the obtained information signal and closest symbol point able to be obtained according to the modulation method in the particular sub-carrier. Note that N is the sub-carrier count.

The phase error averager 114 finds an average phase error across all sub-carriers.

The second frequency error detector 112 and the second frequency corrector 111 correct the frequency error of the reception signal Sig'(i,q)(nT) according to the average phase error, thereby obtaining the reception signal Sig"(i, q) (nT).

With this structure, if, for example, tone noise is present on a specific sub-carrier, the effect of the noise is dispersed across all the sub-carriers by averaging the absolute phase error of the sub-carriers, and therefore the danger that the frequency of the specific sub-carrier will be mistakenly corrected due to the effect of the noise is reduced. In particular, if the specific sub-carrier is one that is modulated according to a CDMA (code division multiple access) method, since the tone noise is spread due to demodulation, the possibility of obtaining correct data is high if mistaken correction is avoided.

<Fourth Embodiment>

Here, a synchronisation symbol generation method used in the frequency synchronization apparatuses and frequency synchronization methods of the first to third embodiments is described.

It is necessary for the synchronisation waveform that composes the synchronization symbol to have both a strong autocorrelation property and a spectrum that falls within a desired frequency band. This is because the synchronization waveform can be more accurately detected if a signal that has a strong autocorrelation property is used as the synchronization waveform. Furthermore, the spectrum must fall within the frequency band being used, in order to avoid affecting neighboring channels.

The following describes a generation method that generates an ideal synchronization symbol by execution of a selection step of selecting a numeric sequence that exhibits a strong autocorrelation property, a synchronization waveform generation step of generating a synchronization waveform from the selected numeric sequence, and a synchronization symbol generation step of generating a synchronization symbol so as to include the generated synchronization waveform at least twice.

<Selection Step>

In the selection step, a numeric sequence that expresses a digital signal and that has a strong autocorrelation property is selected.

An example of such a numeric sequence is a PN code. PN codes are known to have strong autocorrelation properties, the Barker code being one of these. The Barker code is a type of PN code that has a limited number of taps. There are several types of Barker codes that vary in terms of length of tap, but any of these codes may be used. The fact must be taken into account that the accuracy with which frequency error can be detected can be increased if a long Barker code is used for the synchronization waveform, but that transmission efficiency is reduced if the synchronization symbol is long.

<Synchronization waveform generation step>

If the synchronization waveform is expressed using the selected PN code unchanged, the spectrum of the synchronization waveform will spread over the frequency of the whole signal band. If a signal that deviates from the spectrum of the main signal is used as the synchronization symbol, interference will be caused with the spectrum overlapping with the neighboring main signal. Consequently, the signal used as the synchronization waveform must have a narrow pass frequency band and desired frequency properties.

For this reason, in the synchronization generation step, the synchronization waveform is generated by eliminating high frequency components outside the desired band from a digital signal expressed by the numeric sequence whose sampling frequency is treated so as to be half or less of the desired band width. Here, the object is to obtain a synchronization waveform whose frequency spectrum main lobe falls within the desired band, and from which a side lobe, which is the frequency loop-back component outside the desired band, is eliminated.

As one example of a specific method for obtaining a signal waveform such that the main lobe of the frequency spectrum falls within the desired band, each one chip of the PN sequence may be repeated one or more times to create a new sequence. By repeating each chip in this way, the original PN sequence expresses a signal that is drawn out along a time axis.

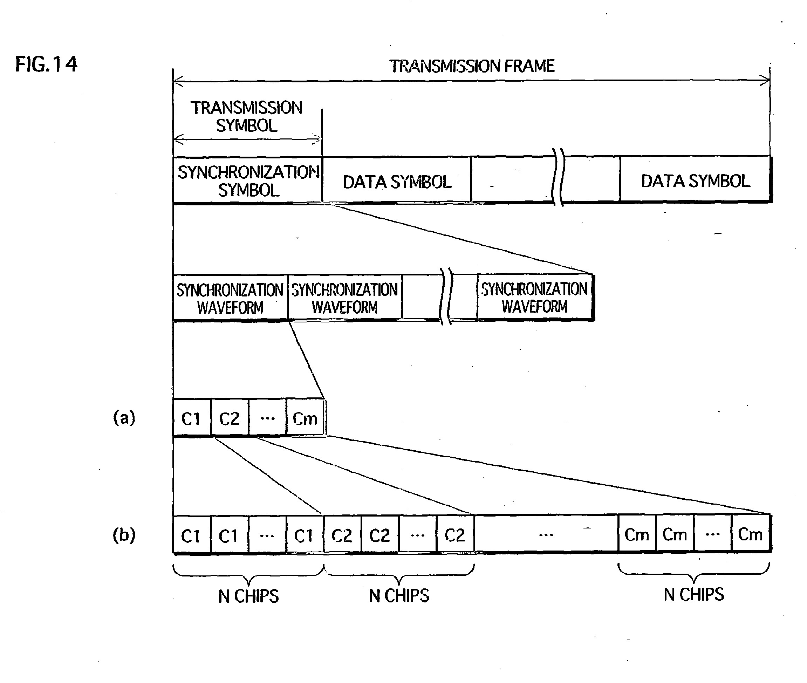

FIG. 14 shows the configuration of a synchronization symbol in which each chip in a PN sequence has been repeated. FIG. 14 shows that one frame is composed of a synchronization symbol and a plurality of data symbols, that the synchronization symbol is composed of a plurality of waveforms, and that the waveform is composed of (a) or (b). In FIG. 14, (a) expresses a case in which a PN sequence having a tap count $m$ is used as the synchronization waveform, and (b) expresses a case in which each chip occurs $N$ times.

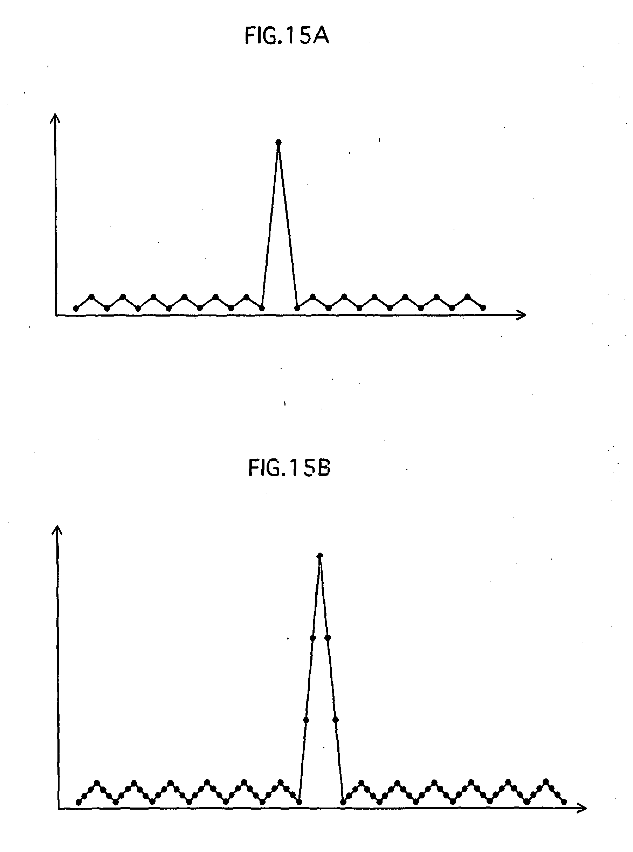

Furthermore, in FIG. 15, (a) and (b) show respective autocorrelation properties of when (a) and (b) in FIG. 14 are used as the synchronisation waveform. FIG. 15 shows that in both (a) and (b) an autocorrelation peak occurs at a point where the signals overlap and that the autocorrelation property is strong. Note that (b) in FIG. 15 shows that the peak occurs across several samples, because each chip is repeated several times. However, the maximum value occurs at one point in this case also. Here, lengthened time on the time axis means that a narrowed frequency band on the frequency axis. Therefore, the width of the spectrum of a signal that is composed of a plurality of each chip can be decreased by increasing the number of repeats. By repeating each chip of the PN sequence in this way, the width of the spectrum can be set to be narrow.

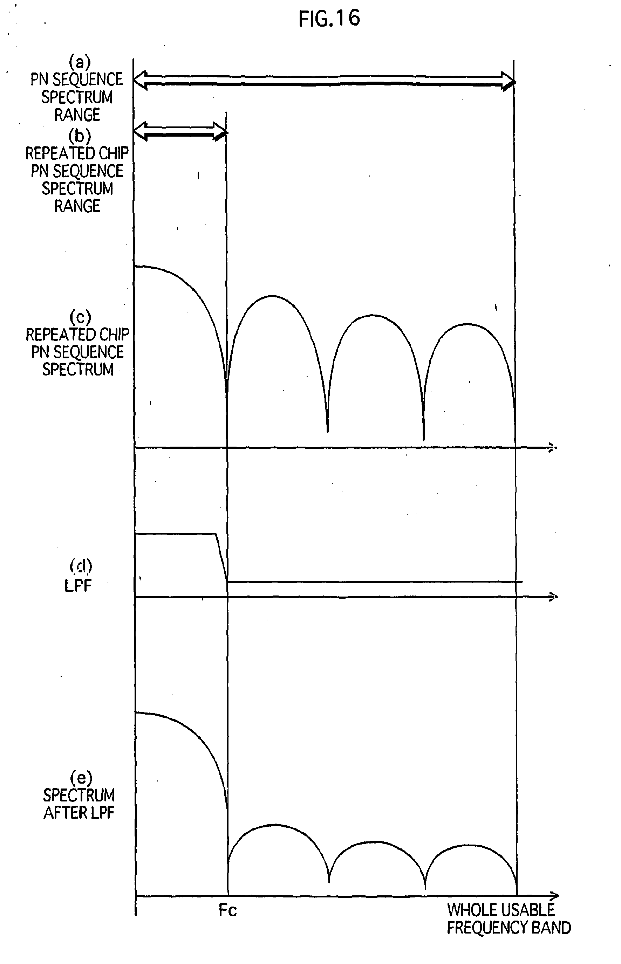

FIG. 16 (a) to (c) are schematic diagrams showing how the spectrum changes by repeating each chip. FIG. 16 (a) shows the range of the spectrum when the PN sequence is used without change as the synchronization waveform, and shows that the spectrum spreads across the whole useable frequency band. Furthermore, FIG. 16(b) shows the range of the spectrum when a signal in which each chip of the PN sequence is repeated is used as the synchronization waveform. The range of the spectrum is smaller than that of FIG. 16(a). FIG. 16(c) shows a specific example of the spectrum. This drawing shows that the main lobe of the spectrum falls within the desired frequency band. By increasing the number of repeats of each chip, the frequency range of the main lobe is reduced.

Furthermore, the width of the frequency band used in reduced when a waveform in which each chip of the PN sequence is repeated a plurality of times as described above is used, but the side lobes remain large compared with other noise and the like (FIG. 16(c)). This may reduce overall precision because interference with other channels increases, and may cause increased residual frequency error. Residual frequency error denotes frequency estimation error that occurs when noise is not included.

For this reason, an LPF (low pass filter) may be designed to obtain a synchronization waveform from which side lobes have been eliminated, and frequency properties further improved by reducing the signal levels outside the desired frequency band. Here, the LPF may be designed using a common method such as cosine roll off. In this way, by using a signal that has passed through the LPF as the synchronization waveform, a synchronization waveform that has the desired frequency properties can be obtained.

FIG. 16(d) and (e) show how the spectrum of the synchronization waveform changes according to the described processing. FIG. 16(d) shows frequency properties of an LPF having a cutoff frequency Fc. The spectrum of the signal that is obtained by repeating each PN signal shown in FIG. 16(c) becomes as shown in FIG. 16(e) by passing through the LPF. A synchronization waveform that does not affect neighboring channels can be obtained by cutting band parts higher than this cutoff frequency Fc.

<Synchronization symbol generation step>

In the synchronization generation step, the synchronization symbol is generated by including the synchronization waveform obtained in the aforementioned step at least twice.

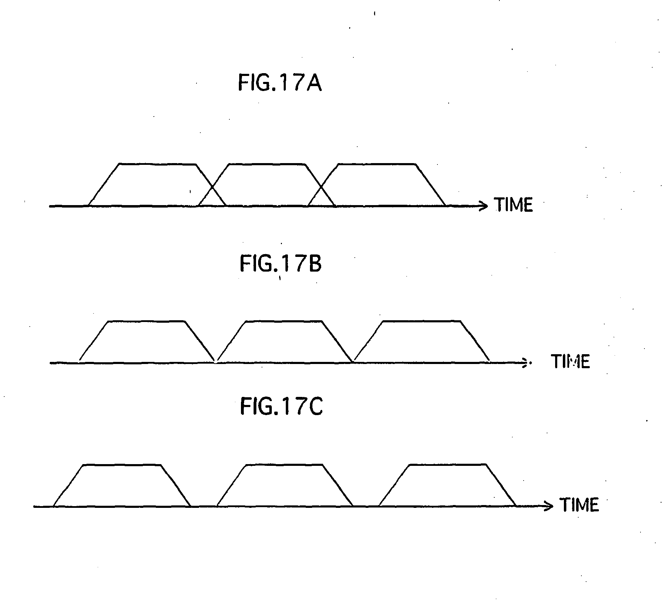

In the above, fluctuations at the start and end of the synchronization waveform remain after passing through the LPF as an extension of the LPF. For this reason, when repeating the synchronization waveform that has passed through the LPF, the fluctuations of the subsequent and previous synchronization waveforms of a particular synchronization waveform will overlap with the particular waveform (FIG. 17(a)), possibly causing deterioration in frequency error detection precision. To solve this problem, the beginning and end of each synchronization waveform may be null, thereby reducing the described effect in the repetition. This is shown in FIG. 17 (b) and (c). As shown in FIG. 17(b), the synchronization waveform may be repeated so that synchronization waveforms neighbor each other exactly but do not overlap, or, as shown in FIG. 17(c), repeated completely removed from each other.

<Additional Remarks>

The synchronisation symbol generator 302 in the correlator 301 generates a reference signal expressing a waveform that is identical to the synchronization waveform generated in this way. Here, the synchronization symbol generator 302 may generate the reference signal with the same quantized bit count as the synchronization waveform in the reception signal, or may generate the reference signal with a lower quantized bit count as the synchronization waveform (for example, approximated with an integer). Even with such an approximation, there will be no effect on the frequency estimation accuracy because the frequency synchronizer and the frequency synchronization method of the present invention focus on the magnitude (peak) of the correlation, not the value of the correlation. Such an approximation enables the actual scale of the circuit to be reduced.

<Application of the signal transmission method>

A synchronization symbol obtained by generating a synchronization waveform and repeating the synchronization waveform according to the described method enables frequency synchronization to be performed without interference with neighboring channels.

Furthermore, by combining the described synchronization symbol generation method and the frequency synchronization method described in any one of the first to third embodiments, a signal transmission method having the characteristics of both methods can be obtained. Such signal transmission method is also included in the present invention.

Industrial Applicability

The frequency synchronization apparatus and frequency synchronization method of the present invention can be used for equalization of signals received by wireless or wired communication, in, for example, a wireless reception apparatus, a digital television broadcast receiver, a digital CATV receiver, a wireless LAN adapter, or a mobile information terminal that has a communication or broadcast reception function.

**EP 1 618 696 B1**

**Claims**

1. A frequency synchronization apparatus that estimates a frequency error between an input signal from an external source and a reference signal, based on a correlation therebetween, and corrects the input signal so as to cancel out the frequency error, the input signal including a synchronization symbol that is composed of a synchronization waveform and the reference signal expressing a waveform that is identical to the synchronization waveform, the frequency synchronization apparatus comprising:

   a correlation unit (104) operable to successively find correlation vectors between the input signal and the reference signal,
   a timing detection unit (105) operable to generate, based on chronological transition in magnitude of the obtained correlation vectors, a synchronization waveform timing signal that indicates a predetermined timing in each cycle of the synchronization waveform;
   a first frequency error detection unit (106) operable to find a frequency error between the input signal and the reference signal;
   an absolute phase error detection unit (107) operable to find an absolute phase error between the input signal and the reference signal, based on the phase of correlation vectors found with the timing indicated by the synchronization waveform timing signal; and
   a first frequency correction unit (108) operable to correct the input signal by simultaneously giving the input signal a frequency shift and a phase rotation that cancel out the found frequency error and the found absolute phase error,
   **characterized in that**
   said synchronization waveform is included at least twice in the synchronization symbol,
   said first frequency error detection unit (106) detecting the frequency error based on an average phase difference between each pair of chronologically neighboring correlation vectors, each of which is obtained with the timing indicated by the synchronization waveform timing signal, and
   said absolute phase error detection unit (107) detecting the absolute phase error based on the chronological transition of the absolute phase of the correlation vectors.

2. The frequency synchronization apparatus of claim 1, further comprising:

   a frequency error holding unit (313; 401) operable to hold the found frequency error, and, when a new frequency error is subsequently found, update the held frequency error with the new frequency error depending on a difference between the held frequency error and the new frequency error; and
   an absolute phase error holding unit (317; 402) operable to hold the found absolute phase error, and, when a new absolute phase error is subsequently found, update the held absolute phase error with the new absolute phase error depending on a difference between the held absolute phase error and the new absolute phase error, wherein the first frequency correction unit (108) corrects the input signal by simultaneously giving the input signal a frequency shift end a phase rotation that cancel out the frequency error being held by the frequency error holding unit (313; 401) and the absolute phase error being held by the absolute phase error holding unit (317; 402).

3. The frequency synchronization apparatus of claim 1 or 2, further comprising:

   a second frequency correction unit (111) operable to be supplied with a control signal, and give an output signal from the first frequency correction unit (108) a frequency shift corresponding to the control signal;
   a phase error detection unit (110; 117) operable to demodulate an output signal from the second frequency correction unit and successively find symbol points in the demodulated output signal, and detect a phase error between the found symbol points and symbol points able to be found in a modulation method of the output signal; and
   a second frequency error detection unit (112) operable to successively output to the second frequency correction unit (111) a control signal for giving an output signal from the first frequency correction unit (108) a frequency shift that cancels out the detected phase error.

4. The frequency synchronization apparatus of claim 3, wherein the input signal has been modulated according to a multicarrier modulation method,
   the phase error detection unit (117) demodulates an output signal from the second frequency correction unit (111) and, for each sub-carrier in the demodulated output signal, successively finds symbol points in the sub-carrier and

15

detects phase error between the found symbol points and symbol points able to be obtained in a modulation method of the sub-carrier,

the frequency synchronization apparatus further comprises a phase error averaging unit (114) operable to average phase errors detected simultaneously for all or some of the sub-carriers, and

the second frequency detection unit (112) successively outputs to the second frequency correction unit (111) a control signal for giving an output signal from the first frequency correction unit a frequency shift that cancels out the average phase error.

**5.** The frequency synchronization apparatus of claim 1, wherein
the input signal includes a data symbol in addition to the synchronization symbol, and
a band of the synchronization symbol is limited so as to fall within an occupied frequency band of the data symbol.

**6.** The frequency synchronization apparatus of claim 5, wherein
the synchronization symbol is **characterized in that** the synchronization waveform is included at least twice with a predetermined time interval therebetween.

**7.** A frequency synchronization apparatus according to any of claims 1 to 6, wherein said frequency synchronization apparatus being part of a one-chip integrated circuit, said one-chip integrated circuit further comprising:

an input terminal operable to obtain the input signal; and
an output terminal operable to output the corrected input signal .

**8.** A frequency synchronization method that estimates a frequency error between an input signal from an external source and a reference signal, based on a correlation therebetween, and corrects the input signal so as to cancel out the frequency error, the input signal including a synchronization symbol that is composed of a synchronization waveform and the reference signal expressing a waveform that is identical to the synchronization waveform, the frequency synchronization method comprising:

a correlation step of successively finding correlation vectors between the input signal and the reference signal,
a timing detection step of identifying, based on chronological transition in magnitude of the obtained correlation vectors, each cycle of the synchronization waveform;
a first frequency error detection step of finding a frequency error between the input signal and the reference signal;
an absolute phase error detection step of finding an absolute phase error between the input signal and the reference signal, based on the phase of correlation vectors that are representative of the identified cycles; and
a first frequency correction step of correcting the input signal by simultaneously giving the input signal a frequency shift and a phase rotation that cancel out the found frequency error and the found absolute phase error,
**characterized in that**
said synchronization waveform is included at least twice in the synchronization symbol,
said first frequency error detection step detecting the frequency error based on an average phase difference between each pair of chronologically neighboring correlation vectors that are representative of the identified cycles, and
said absolute phase error detection step detecting the absolute phase error based on the chronological transition of the absolute phase of the correlation vectors.

**9.** The frequency synchronization method of claim 8, further comprising:

a frequency error recording step of recording the found frequency error, and, when a new frequency error is subsequently found, updating the recorded frequency error with the new frequency error depending on a difference between the recorded frequency error and the new frequency error, and
an absolute phase error recording step of recording the found absolute phase error, and, when a new absolute phase error is subsequently found, updating the recorded absolute phase error with the new absolute phase error depending on a difference between the recorded absolute phase error and the new absolute phase error, wherein the first frequency correction step corrects the input signal by simultaneously giving the input signal a frequency shift and a phase rotation that cancel out the frequency error recorded in the frequency error holding step and the absolute phase error recorded in the absolute phase error recording step.

**10.** The frequency synchronization method of claim 8 or 9, further comprising:

a second frequency correction step of being instructed of a frequency shift, and giving a signal obtained in the first frequency correction step the instructed frequency shift;

a phase error detection step of demodulating a signal obtained in the second frequency correction step and successively finding symbol points in the demodulated output signal, and detecting a phase error between the found symbol points and symbol points able to be found in a modulation method of the output signal; and

a second frequency error detection step of successively instructing to the second frequency correction step of a frequency shift that cancels out the detected phase error.

11. The frequency synchronization method of claim 10, wherein the input signal has been modulated according to a multicarrier modulation method,

the phase error detection step demodulates a signal obtained in the second frequency correction step and for each sub-carrier in the demodulated output signal successively finds symbol points in the sub-carrier and detects phase error between the found symbol points and symbol points able to be obtained in a modulation method of the sub-carrier,

the frequency synchronization method further comprises a phase error averaging step of averaging phase errors detected simultaneously for all or some of the sub-carriers in the absolute phase error detection step, and

the second frequency detection step successively instructs the second frequency correction step of a frequency shift that cancels out the average phase error.

12. A method according to any of claims 8 to 11, further comprising a demodulation step of demodulating the corrected input signal, thereby generating a demodulated signal.

**Patentansprüche**

1. Frequenzsynchronisationsvorrichtung, die eine Frequenzabweichung zwischen einem Eingangssignal von einer externen Quelle und einem Bezugssignal auf Basis einer Korrelation zwischen ihnen schätzt und das Eingangssignal so korrigiert, dass die Frequenzabweichung aufgehoben wird, wobei das Eingangssignal ein Synchronisationssymbol enthält, das aus einer Synchronisations-Wellenform zusammengesetzt ist, und das Bezugssignal eine Wellenform ausdrückt, die identisch mit der Synchronisations-Wellenform ist, wobei die Frequenzsynchronisationsvorrichtung umfasst:

eine Korrelationseinheit (104), die so betrieben werden kann, dass sie erfolgreich Korrelationsvektoren zwischen dem Eingangssignal und dem Bezugssignal findet,

eine Zeitablauf-Erfassungseinheit (105), die so betrieben werden kann, dass sie auf Basis eines chronologischen Übergangs des Betrags der gewonnenen Korrelationsvektoren ein Synchronisations-Wellenform-Zeitablaufsignal erzeugt, das einen vorgegebenen Zeitablauf in jedem Zyklus der Synchronisations-Wellenform anzeigt;

eine erste Frequenzabweichungs-Erfassungseinheit (106), die so betrieben werden kann, dass sie eine Frequenzabweichung zwischen dem Eingangssignal und dem Bezugssignal findet;

eine Absolut-Phasenabweichungs-Erfassungseinheit (107), die so betrieben werden kann, dass sie eine Absolut-Phasenabweichung zwischen dem Eingangssignal und dem Bezugssignal auf Basis der Phase von Korrelationsvektoren findet, die mit dem Zeitablauf gefunden werden, der durch das Synchronisations-Wellenform-Zeitablaufsignal angezeigt wird; und

eine erste Frequenzkorrektureinheit (108), die so betrieben werden kann, dass sie das Eingangssignal korrigiert, indem sie dem Eingangssignal gleichzeitig eine Frequenzverschiebung und eine Phasendrehung verleiht, die die gefundene Frequenzabweichung und die gefundene Absolut-Phasenabweichung aufheben,

**dadurch gekennzeichnet, dass**

die Synchronisations-Wellenform wenigstens zweimal in dem Synchronisationssymbol enthalten ist,

die erste Frequenzabweichungs-Erfassungseinheit (106) die Frequenzabweichung auf Basis einer durchschnittlichen Phasendifferenz zwischen jedem Paar chronologisch benachbarter Korrelationsvektoren erfasst, von denen jeder mit dem durch das Synchronisations-Wellenform-Zeitablaufsignal angezeigten Zeitablauf gewonnen wird, und

die Absolut-Phasenabweichungs-Erfassungseinheit (107) die Absolut-Phasenabweichung auf Basis des chronologischen Übergangs der absoluten Phase der Korrelationsvektoren erfasst.

2. Frequenzsynchronisationsvorrichtung nach Anspruch 1, die des Weiteren umfasst:

eine Frequenzabweichungs-Halteeinheit (313; 401), die so betrieben werden kann, dass sie die gefundene Frequenzabweichung hält, und wenn anschließend eine neue Frequenzabweichung gefunden wird, die gehaltene Frequenzabweichung mit der neuen Frequenzabweichung in Abhängigkeit von einer Differenz zwischen der gehaltenen Frequenzabweichung und der neuen Frequenzabweichung aktualisiert; und
eine Absolut-Phasenabweichungs-Halteeinheit (317; 402), die so betrieben werden kann, dass sie die gefundene Absolut-Phasenabweichung hält, und, wenn anschließend eine neue Absolut-Phasenabweichung gefunden wird, die gehaltene Absolut-Phasenabweichung mit der neuen Absolut-Phasenabweichung in Abhängigkeit von einer Differenz zwischen der gehaltenen Absolut-Phasenabweichung und der neuen Absolut-Phasenabweichung aktualisiert,
wobei die erste Frequenzkorrektureinheit (108) das Eingangssignal korrigiert, indem sie dem Eingangssignal gleichzeitig eine Frequenzverschiebung und eine Phasendrehung verleiht, die die durch die Frequenzabweichungs-Halteeinheit (313; 401) gehaltene Frequenzabweichung und die durch die Absolut-Phasenabweichungs-Halteeinheit (317; 402) gehaltene Absolut-Phasenabweichung aufheben.

3. Frequenzsynchronisationsvorrichtung nach Anspruch 1 oder 2, die des Weiteren umfasst:

eine zweite Frequenzkorrektureinheit (111), die so betrieben werden kann, dass ihr ein Steuersignal zugeführt wird, und die einem Ausgangssignal von der ersten Frequenzkorrektureinheit (108) eine Frequenzverschiebung verleiht, die dem Steuersignal entspricht;
eine Phasenabweichungs-Erfassungseinheit (110; 117), die so betrieben werden kann, dass sie ein Ausgangssignal von der zweiten Frequenzkorrektureinheit demoduliert und nacheinander Symbol-Punkte in dem demodulierten Ausgangssignal findet, und eine Phasenabweichung zwischen den gefundenen Symbol-Punkten und Symbol-Punkten erfasst, die bei einem Modulationsverfahren des Ausgangssignals gefunden werden können; und
eine zweite Frequenzabweichungs-Erfassungseinheit (112), die so betrieben werden kann, dass sie nacheinander ein Steuersignal an die zweite Frequenzkorrektureinheit (111) ausgibt, um einem Ausgangssignal von der ersten Frequenzkorrektureinheit (108) eine Frequenzverschiebung zu verleihen, die die erfasste Phasenabweichung aufhebt.

4. Frequenzsynchronisationsvorrichtung nach Anspruch 3, wobei das Eingangsignal entsprechend einem Mehrfachträger-Modulationsverfahren moduliert worden ist,
die Phasenabweichungs-Erfassungseinheit (117) ein Ausgangssignal von der zweiten Frequenzkorrektureinheit (111) demoduliert und für jeden Teilträger in dem demodulierten Ausgangssignal nacheinander Symbol-Punkte in dem Teilträger findet und Phasenabweichung zwischen den gefundenen Symbol-Punkten und Symbol-Punkten findet, die bei einem Modulationsverfahren des Teilträgers ermittelt werden können,
die Frequenzsynchronisationsvorrichtung des Weiteren eine Phasenabweichungs-Mittlungseinheit (114) umfasst, die so betrieben werden kann, dass sie Phasenabweichungen mittelt, die gleichzeitig für alle oder einige der Teilträger erfasst werden, und
die zweite Frequenzerfassungseinheit (112) nacheinander ein Steuersignal an die zweite Frequenzkorrektureinheit (111) ausgibt, um einem Ausgangssignal von der ersten Frequenzkorrektureinheit eine Frequenzverschiebung zu verleihen, die die gemittelte Phasenverschiebung aufhebt.

5. Frequenzsynchronisationsvorrichtung nach Anspruch 1, wobei
das Eingangsignal ein Daten-Symbol zusätzlich zu dem Synchronisations-Symbol enthält, und
ein Band des Synchronisations-Symbols so begrenzt ist, dass es in ein besetztes Frequenzband des Daten-Symbols fällt.

6. Frequenzsynchronisationsvorrichtung nach Anspruch 5, wobei das Synchronisations-Symbol **dadurch gekennzeichnet ist, dass** die Synchronisations-Wellenform wenigstens zweimal mit einem vorgegebenen Zeitintervall dazwischen enthalten ist.

7. Frequenzsynchronisationsvorrichtung nach einem der Ansprüche 1 bis 6, wobei die Frequenzsynchronisationsvorrichtung Teil einer integrierten Ein-Chip-Schaltung ist und die integrierte Ein-Chip-Schaltung des Weiteren umfasst:

einen Eingangsanschluss, der so betrieben werden kann, dass er das Eingangssignal erfasst; und
einen Ausgangsanschluss, der so betrieben werden kann, dass er das korrigierte Eingangssignal ausgibt,

8. Frequenzsynchronisationsverfahren, das eine Frequenzabweichung zwischen einem Eingangssignal von einer externen Quelle und einem Bezugssignal auf Basis einer Korrelation zwischen ihnen schätzt und das Eingangssignal so korrigiert, dass die Frequenzabweichung aufgehoben wird, wobei das Eingangssignal ein Synchronisations-Symbol enthält, das aus einer Synchronisations-Wellenform zusammengesetzt ist, und das Bezugssignal eine Wellenform ausdrückt, die identisch mit der Synchronisations-Wellenform ist, wobei das Frequenzsynchronisationsverfahren umfasst:

einen Korrelationsschritt des aufeinanderfolgenden Findens von Korrelations-Vektoren zwischen dem Eingangssignal und dem Bezugssignal,

einen Zeitablauf-Erfassungsschritt des Identifizierens jedes Zyklus der Synchronisations-Wellenform auf Basis von chronologischem Übergang eines Betrages der erfassten Korrelations-Vektoren,

einen ersten Frequenzabweichungs-Erfassungsschritt des Findens einer Frequenzabweichung zwischen dem Eingangssignal und dem Bezugssignal;

einen Absolut-Phasenabweichungs-Erfassungsschritt des Findens einer Absolut-Phasenabweichung zwischen dem Eingangssignal und dem Bezugssignal auf Basis der Phase von Korrelations-Vektoren, die repräsentativ für die identifizierten Zyklen sind; und

einen ersten Frequenzkorrekturschritt, mit dem das Eingangssignal korrigiert wird, indem dem Eingangssignal gleichzeitig eine Frequenzverschiebung und eine Phasendrehung verliehen werden, die die gefundene Frequenzabweichung und die gefundene Absolut-Phasenabweichung aufheben,
**dadurch gekennzeichnet, dass**
die Synchronisations-Wellenform wenigstens zweimal in dem Synchronisations-Symbol enthalten ist,

der erste Frequenzabweichungs-Erfassungsschritt die Frequenzabweichung auf Basis einer durchschnittlichen Phasendifferenz zwischen jedem Paar chronologisch benachbarter Korrelations-Vektoren erfasst, die repräsentativ für die identifizierten Zyklen sind, und

der Absolut-Phasenabweichungs-Erfassungsschritt die Absolut-Phasenabweichung auf Basis des chronologischen Übergangs der absoluten Phase der Korrelations-Vektoren erfasst.

9. Frequenzsynchronisationsverfahren nach Anspruch 8, das des Weiteren umfasst:

einen Frequenzabweichungs-Aufzeichnungsschritt, mit dem die gefundene Frequenzabweichung aufgezeichnet wird, und, wenn anschließend eine neue Frequenzabweichung gefunden wird, die aufgezeichnete Frequenzabweichung mit der neuen Frequenzabweichung in Abhängigkeit von einer Differenz zwischen der aufgezeichneten Frequenzabweichung und der neuen Frequenzabweichung aktualisiert wird, und

einen Absolut-Phasenabweichungs-Aufzeichnungsschritt, mit dem die gefundene Absolut-Phasenabweichung aufgezeichnet wird, und, wenn anschließend eine neue Absolut-Phasenabweichung gefunden wird, die aufgezeichnete Absolut-Phasenabweichung mit der neuen Absolut-Phasenabweichung in Abhängigkeit von einer Differenz zwischen der aufgezeichneten Absolut-Phasenabweichung und der neuen Absolut-Phasenabweichung aktualisiert wird,

wobei der erste Frequenzkorrekturschritt das Eingangssignal korrigiert, indem er dem Eingangsignal gleichzeitig eine Frequenzverschiebung und eine Phasendrehung verleiht, die die in dem Frequenzabweichungs-Halteschritt aufgezeichnete Frequenzabweichung und die in dem Absolut-Phasenabweichungs-Aufzeichnungsschritt aufgezeichnete Absolut-Phasenabweichung aufheben.

10. Frequenzsynchronisationsverfahren nach Anspruch 8 oder 9, das des Weiteren umfasst:

einen zweiten Frequenzkorrekturschritt, bei dem eine Frequenzverschiebung angewiesen wird und einem Signal, das in dem ersten Frequenzkorrekturschritt gewonnen wird, die angewiesene Frequenzverschiebung verliehen wird ;

einen Phasenabweichungs-Erfassungsschritt des Demodulierens eines in dem zweiten Frequenzkorrekturschritt gewonnenen Signals und des aufeinander folgenden Findens von Symbol-Punkten in dem demodulierten Ausgangssignal und des Erfassens einer Phasenabweichung zwischen den gefundenen Symbol-Punkten und Symbol-Punkten, die in einem Modulationsverfahren des Ausgangssignals gefunden werden können; und

einen zweiten Frequenzabweichungs-Erfassungsschritt, mit dem dem zweiten Frequenzkorrekturschritt aufeinanderfolgend eine Frequenzverschiebung angewiesen wird, die die erfasste Phasenabweichung aufhebt.

11. Frequenzsynchronisationsverfahren nach Anspruch 10, wobei das Eingangssignal entsprechend einem Mehrfachträger-Modulationsverfahren moduliert worden ist,
der Phasenabweichungs-Erfassungsschritt ein Signal demoduliert, das in dem zweiten Frequenzkorrekturschritt gewonnen wird und für jeden Teilträger in dem demodulierten Ausgangssignal nacheinander Symbol-Punkte in dem Teilträger findet und Phasenabweichung zwischen den gefundenen Symbol-Punkten und Symbol-Punkten erfasst, die in einem Modulationsverfahren des Teilträgers gewonnen werden können,
das Frequenzsynchronisationsverfahren des Weiteren einen Phasenabweichungs-Mittlungsschritt des Mittelns von Phasenabweichungen umfasst, die gleichzeitig für alle oder einige der Teilträger in dem Absolut-Phasenabweichungs-Erfassungsschritt erfasst werden, und
der zweite Frequenzerfassungsschritt dem zweiten Frequenzkorrekturschritt aufeinanderfolgend eine Frequenzverschiebung anweist, die die gemittelte Phasenabweichung aufhebt.

**12.** Verfahren nach einem der Ansprüche 8 bis 11, das des Weiteren einen Demodulationsschritt des Demodulierens des korrigierten Eingangssignals umfasst, um so ein demoduliertes Signal zu erzeugen.

## Revendications

**1.** Dispositif de synchronisation de fréquence qui estime une erreur de fréquence entre un signal d'entrée en provenance d'une source externe et un signal de référence, sur la base d'une corrélation entre les deux, et corrige le signal d'entrée de sorte à supprimer l'erreur de fréquence, le signal d'entrée incluant un symbole de synchronisation qui est constitué d'une forme d'onde de synchronisation et le signal de référence exprimant une forme d'onde qui est identique à la forme d'onde de synchronisation, le dispositif de synchronisation de fréquence comprenant :

une unité de corrélation (104) permettant de trouver successivement des vecteurs de corrélation entre le signal d'entrée et le signal de référence,
une unité de détection de temps (105) permettant de générer, sur la base d'une transition chronologique dans la magnitude des vecteurs de corrélation obtenus, un signal de temps de forme d'onde de synchronisation qui indique un instant prédéterminé dans chaque cycle de la forme d'onde de synchronisation;
une première unité de détection d'erreur de fréquence (106) permettant de trouver une erreur de fréquence entre le signal d'entrée et le signal de référence ;
une unité de détection d'erreur de phase absolue (107) permettant de trouver une erreur de phase absolue entre le signal d'entrée et le signal de référence, sur la base de la phase des vecteurs de corrélation trouvés avec l'instant indiqué par le signal de temps de forme d'onde de synchronisation ; et
une première unité de correction de fréquence (108) permettant de corriger le signal d'entrée en donnant simultanément au signal d'entrée un décalage de fréquence et une rotation de phase qui suppriment l'erreur de fréquence trouvée et l'erreur de phase absolue trouvée,
**caractérisé en ce que**
ladite forme d'onde de synchronisation est incluse au moins deux fois dans le symbole de synchronisation,
ladite première unité de détection d'erreur de fréquence (106) détectant l'erreur de fréquence sur la base d'une différence de phase moyenne entre chaque paire de vecteurs de corrélation chronologiquement voisins, chacun desquels est obtenu avec l'instant indiqué par le signal de temps de forme d'onde de synchronisation, et
ladite unité de détection d'erreur de phase absolue (107) détectant l'erreur de phase absolue sur la base de la transition chronologique de la phase absolue des vecteurs de corrélation.

**2.** Dispositif de synchronisation de fréquence selon la revendication 1, comprenant en outre:

une unité de maintien d'erreur de fréquence (313; 401) permettant de maintenir l'erreur de fréquence trouvée, et, quand une nouvelle erreur de fréquence est trouvée par la suite, actualiser l'erreur de fréquence maintenue avec la nouvelle erreur de fréquence en fonction d'une différence entre l'erreur de fréquence maintenue et la nouvelle erreur de fréquence, et
une unité de maintien d'erreur de phase absolue (317 ; 402) permettant de maintenir l'erreur de phase absolue trouvée, et, quand une nouvelle erreur de phase absolue est trouvée par la suite, actualiser l'erreur de phase absolue maintenue avec la nouvelle erreur de phase absolue en fonction d'une différence entre l'erreur de phase absolue maintenue et la nouvelle erreur de phase absolue,
dans lequel la première unité de correction de fréquence (108) corrige le signal d'entrée en donnant simultanément au signal d'entrée un décalage de fréquence et une rotation de phase qui suppriment l'erreur de fréquence étant maintenue par l'unité de maintien d'erreur de fréquence (313 ; 401) et l'erreur de phase absolue étant maintenue par l'unité de maintien d'erreur de phase (317 ; 402).

**3.** Dispositif de synchronisation de fréquence selon la revendication 1 ou 2, comprenant en outre :

une deuxième unité de correction de fréquence (111) permettant de recevoir un signal de commande, et de donner à un signal de sortie en provenance de la première unité de correction de fréquence (108) un décalage de fréquence correspondant au signal de commande ;

une unité de détection d'erreur de phase (110 ; 117) permettant de démoduler un signal de sortie en provenance de la deuxième unité de correction de fréquence et de successivement trouver des points de symboles dans le signal de sortie démodulé, et de détecter une erreur de phase entre les points de symboles trouvés et les points de symboles susceptibles d'être trouvés dans un procédé de modulation du signal de sortie ; et

une deuxième unité de détection d'erreur de fréquence (112) permettant d'émettre successivement à la deuxième unité de correction de fréquence (111) un signal de commande pour donner à un signal de sortie en provenance de la première unité de correction de fréquence (108) un décalage de fréquence qui supprime l'erreur de phase détectée.

4. Dispositif de synchronisation de fréquence 3, dans lequel le signal d'entrée a été modulé selon un procédé de modulation multiporteuse,

l'unité de détection d'erreur de phase (117) démodule un signal de sortie en provenance de la deuxième unité de correction de fréquence (111) et, pour chaque sous-porteuse dans le signal de sortie démodulé, trouve successivement des points de symboles dans la sous-porteuse et détecte une erreur de phase entre les points de symboles trouvés et les points de symboles susceptibles d'être obtenus dans un procédé de modulation de la sous-porteuse,

le dispositif de synchronisation de fréquence comprend en outre une unité de pondération d'erreur de phase (114) permettant de pondérer des erreurs de phase détectées simultanément pour l'ensemble ou certaines des sous-porteuses, et

la deuxième unité de détection de fréquence (112) émet successivement à la deuxième unité de correction de fréquence (111) un signal de commande pour donner à un signal de sortie en provenance de la première unité de correction de fréquence un décalage de fréquence qui supprime l'erreur de phase moyenne.

5. Dispositif de synchronisation de fréquence selon la revendication 1, dans lequel

le signal d'entrée inclut un symbole de donnée en plus du symbole de synchronisation, et

une bande du symbole de synchronisation est limitée de sorte de se situer dans une bande de fréquence occupée du symbole de donnée.

6. Dispositif de synchronisation de fréquence selon la revendication 5, dans lequel

le symbole de synchronisation est **caractérisé en ce que** la forme d'onde de synchronisation est incluse au moins deux fois avec un intervalle de temps prédéterminé entre les deux.

7. Dispositif de synchronisation de fréquence selon l'une quelconque des revendications 1 à 6, dans lequel ledit dispositif de synchronisation de fréquence faisant partie d'un circuit intégré monopuce, ledit circuit intégré monopuce comprenant en outre :

une borne d'entrée permettant d'obtenir le signal d'entrée ; et
une borne de sortie permettant d'émettre le signal d'entrée corrigé.

8. Procédé de synchronisation de fréquence qui estime une erreur de fréquence entre un signal d'entrée en provenance d'une source externe et un signal de référence, sur la base d'une corrélation entre les deux, et corrige le signal d'entrée de sorte à supprimer l'erreur de fréquence, le signal d'entrée incluant un symbole de synchronisation qui est constitué d'une forme d'onde de synchronisation et le signal de référence exprimant une forme d'onde qui est identique à la forme d'onde de synchronisation, le procédé de synchronisation de fréquence comprenant :

une étape de corrélation consistant à trouver successivement des vecteurs de corrélation entre le signal d'entrée et le signal de référence,

une étape de détection de temps consistant à identifier, sur la base d'une transition chronologique dans la magnitude des vecteurs de corrélation obtenus, chaque cycle de la forme d'onde de synchronisation ;

une première étape de détection d'erreur de fréquence consistant à trouver une erreur de fréquence entre le signal d'entrée et le signal de référence ;

une étape de détection d'erreur de phase absolue consistant à trouver une erreur de phase absolue entre le signal d'entrée et le signal de référence, sur la base de la phase des vecteurs de corrélation qui sont représentatifs des cycles identifiés ; et

une première étape de correction de fréquence consistant à corriger le signal d'entrée en donnant simultanément au signal d'entrée un décalage de fréquence et une rotation de phase qui suppriment l'erreur de fréquence trouvée et l'erreur de phase absolue trouvée,

**caractérisé en ce que**

ladite forme d'onde de synchronisation est incluse au moins deux fois dans le symbole de synchronisation,

ladite première étape de détection d'erreur de fréquence détectant l'erreur de fréquence sur la base d'une différence de phase moyenne entre chaque paire de vecteurs de corrélation chronologiquement voisins qui sont représentatifs des cycles identifiés, et

ladite étape de détection d'erreur de phase absolue détectant l'erreur de phase absolue sur la base de la transition chronologique de la phase absolue des vecteurs de corrélation.

9. Procédé de synchronisation de fréquence selon la revendication 8, comprenant en outre:

une étape d'enregistrement d'erreur de fréquence consistant à enregistrer l'erreur de fréquence trouvée, et, quand une nouvelle erreur de fréquence est trouvée par la suite, actualiser l'erreur de fréquence enregistrée avec la nouvelle erreur de fréquence en fonction d'une différence entre l'erreur de fréquence enregistrée et la nouvelle erreur de fréquence, et

une étape d'enregistrement d'erreur de phase absolue consistant à enregistrer l'erreur de phase absolue trouvée, et, quand une nouvelle erreur de phase absolue est trouvée par la suite, actualiser l'erreur de phase absolue enregistrée avec la nouvelle erreur de phase absolue en fonction d'une différence entre l'erreur de phase absolue enregistrée et la nouvelle erreur de phase absolue,

dans lequel la première étape de correction de fréquence corrige le signal d'entrée en donnant simultanément au signal d'entrée un décalage de fréquence et une rotation de phase qui suppriment l'erreur de fréquence enregistrée pendant l'étape de maintien d'erreur de fréquence et l'erreur de phase absolue enregistrée pendant l'étape d'enregistrement d'erreur de phase absolue.

10. Procédé de synchronisation de fréquence selon la revendication 8 ou 9, comprenant en outre :

une deuxième étape de correction de fréquence consistant à être instruit d'un décalage de fréquence, et à donner à un signal obtenu pendant la première étape de correction de fréquence le décalage de fréquence instruit ;

une étape de détection d'erreur de phase consistant à démoduler un signal obtenu pendant la deuxième étape de correction de fréquence et à successivement trouver des points de symboles dans le signal de sortie démodulé, et à détecter une erreur de phase entre les points de symboles trouvés et les points de symboles susceptibles d'être trouvés dans un procédé de modulation du signal de sortie; et

une deuxième étape de détection d'erreur de fréquence consistant à instruire successivement à la deuxième étape de correction de fréquence d'un décalage de fréquence qui supprime l'erreur de phase détectée.

11. Procédé de synchronisation de fréquence selon la revendication 10, dans lequel le signal d'entrée a été modulé selon un procédé de modulation multiporteuse,

l'étape de détection d'erreur de phase démodule un signal obtenu pendant la deuxième étape de correction de fréquence et pour chaque sous-porteuse dans le signal de sortie démodulé, trouve successivement des points de symboles dans la sous-porteuse et détecte une erreur de phase entre les points de symboles trouvés et les points de symboles susceptibles d'être obtenus dans un procédé de modulation de la sous-porteuse,

le procédé de synchronisation de fréquence comprend en outre une étape de pondération d'erreur de phase consistant à pondérer des erreurs de phase détectées simultanément pour l'ensemble ou certaines des sous-porteuses pendant l'étape de détection d'erreur de phase absolue, et

la deuxième étape de détection de fréquence instruit successivement à la deuxième étape de correction de fréquence d'un décalage de fréquence qui supprime l'erreur de phase moyenne.

12. Procédé selon l'une quelconque des revendications 8 à 11, comprenant en outre une étape de démodulation consistant à démoduler le signal d'entrée corrigé, générant ainsi un signal démodulé.

# FIG.1

EP 1 618 696 B1

# FIG.2

# FIG.3

| | SYNCHRONIZATION SYMBOL | DATA SYMBOL |
|---|---|---|

(a)
RECEPTION
SIGNAL

(b)
SYNCHRONIZATION
WAVEFORM TIMING
SIGNAL

(c)
SYNCHRONIZATION
SYMBOL FINISH
TIMING SIGNAL

THRESHOLD
VALUE

(d)
CORRELATION

(e)
CORRELATION
VECTOR

(f)
ABSOLUTE PHASE

ABSOLUTE PHASE
ERROR $\Delta\theta$

COMPLEX
MULTIPLICATION

(g)
PHASE DIFFERENCE
VECTOR

(h)
AVERAGE PHASE
DIFFERENCE
VECTOR

FIRST FREQUENCY
ERROR
$\theta_0$ $\Delta f1 = \theta_0/2\pi T$

TIME

## FIG.4

CORRELATION ESTIMATOR 104

CORRELATOR 301

SYNCHRONIZATION SYMBOL GENERATOR 302

ORTHOGONAL DETECTOR 102

Sig(i,q)(nT)

REFERENCE SIGNAL Ref(i,q)(nT)

CORRELATION VECTOR Ccorr(i,q)(nT)

TIMING DETECTOR 105

FIRST FREQUENCY ERROR DETECTOR 106

ABSOLUTE PHASE DIFFERENCE DETECTOR 107

EP 1 618 696 B1

# FIG.5

TIMING DETECTOR  105

ORTHOGONAL DETECTOR 102 → Sig(i,q)(nT) → POWER CALCULATOR 304 → POWER Pow(nT) → THRESHOLD CALCULATOR 305 → THRESHOLD THLD

CORRELATION ESTIMATOR 104 → CORRELATION VECTOR Ccorr(i,q)(nT) → ABSOLUTE VALUE CALCULATOR 306 → CORRELATION | Ccorr(i,q)(nT) | → PEAK DETECTOR 307 → TIMING PROTECTOR 308

SYNCHRONIZATION WAVEFORM TIMING Tsyn

SYNCHRONIZATION SYMBOL FINISH TIMING Tfin → FIRST FREQUENCY ERROR DETECTOR 106

ABSOLUTE PHASE ERROR DETECTOR 107

EP 1 618 696 B1

FIG.6

FIRST FREQUENCY
ERROR DETECTOR

106

PHASE DIFFERENCE
VECTOR
Acorr(i,q)(nT)

AVERAGE PHASE
DIFFERENCE VECTOR
Accum(i,q)

FIRST FREQUENCY
ERROR $\Delta f_1$

309

CORRELATION
ESTIMATOR
104

AVERAGER

FREQUENCY
ERROR
CALCULATOR

HOLDER

FIRST FREQUENCY
CORRECTOR
108

310

311

312

313

CORRELATION
VECTOR
Ccorr(i,q)(nT)

DELAYER

SYNCHRONIZATION
WAVEFORM TIMING
Tsyn

SYNCHRONIZATION
SYMBOL FINISH TIMING
Tfin

TIMING
DETECTOR 105

TIMING
DETECTOR 105

EP 1 618 696 B1

FIG.7

EP 1 618 696 B1

# FIG.8

FIRST FREQUENCY CORRECTOR ~108

318

ORTHOGONAL DETECTOR 102

Sig(i,q)(nT)

CORRECTION VALUE X(i,q)(nT)

319

CORRECTION VALUE ESTIMATOR

DEMODULATOR 113

Sig'(i,q)(nT)

FIRST FREQUENCY ERROR $\Delta f_1$

ABSOLUTE PHASE ERROR $\Delta \theta$

FIRST FREQUENCY ERROR DETECTOR 106

ABSOLUTE PHASE ERROR DETECTOR 107

EP 1 618 696 B1

# FIG.9

RECEPTION SIGNAL

| SYNCHRONI-ZATION SYMBOL | DATA SYMBOL |

ABSOLUTE PHASE ERROR
(a)
FREQUENCY ERROR CORRECTION ONLY

$\Delta \theta$

→ TIME

SYNCHRONIZATION SYMBOL FINISH TIMING

ABSOLUTE PHASE ERROR
(b)
FREQUENCY ERROR CORRECTION ONLY
(PHASE SYNCHRONIZER AT LATTER STAGE)

→ TIME

STABLE OPERATION

SYNCHRONIZATION SYMBOL FINISH TIMING

ABSOLUTE PHASE ERROR
(c)
FREQUENCY ERROR AND ABSOLUTE PHASE ERROR CORRECTION

→ TIME

STABLE OPERATION

SYNCHRONIZATION SYMBOL FINISH TIMING

FIG.10

115

FIRST FREQUENCY SYNCHRONIZER

101
A/D CONVERTER

102
ORTHOGONAL DETECTOR

108
FIRST FREQUENCY CORRECTOR

113
DEMODULATOR

sig(t)    Sig(nT)

Sig(i,q)(nT)

105
TIMING DETECTOR

FIRST FREQUENCY ERROR $\Delta f_1$

ABSOLUTE PHASE ERROR $\Delta\theta$

Sig'(i,q)(nT)

104
CORRELATION ESTIMATOR

106
FIRST FREQUENCY ERROR DETECTOR

401
FREQUENCY ERROR HOLDER

CORRELATION VECTOR Ccorr(i,q)(nT)

SYNCHRONIZATION WAVEFORM TIMING Tsyn

SYNCHRONIZATION SYMBOL FINISH TIMING Tfin

107
ABSOLUTE PHASE ERROR DETECTOR

402
ABSOLUTE PHASE ERROR HOLDER

EP 1 618 696 B1

32

# FIG.11

# FIG.12

RECEPTION SIGNAL | SYNCHRONIZATION SYMBOL | DATA SYMBOL

ABSOLUTE PHASE ERROR

FREQUENCY ERROR AND
ABSOLUTE PHASE ERROR
CORRECTION
(PHASE SYNCHRONIZER
AT LATTER STAGE)

FURTHER ERROR REDUCTION

TIME

STABLE OPERATION

SYNCHRONIZATION
SYMBOL FINISH TIMING

EP 1 618 696 B1

FIG.13

FIRST FREQUENCY SYNCHRONIZER 103

Sig'(i,q)(nT)

DEMODULATOR 113

Sig''(i,q)(nT)

INDIVIDUAL PHASE ERROR
$\Delta\theta_{2.1}, \Delta\theta_{2.2}, \cdots, \Delta\theta_{2.N}$
(N IS SUB-CARRIER COUNT)

116

SECOND FREQUENCY SYNCHRONIZER

111

SECOND FREQUENCY CORRECTOR

117

PHASE ERROR DETECTOR

114

PHASE ERROR AVERAGER

SECOND FREQUENCY ERROR $\Delta f_2$

112

SECOND FREQUENCY ERROR DETECTOR

PHASE ERROR $\Delta\theta_2 = (\sum\limits_{k}^{N} \Delta\theta_{2.k})/N$

FIG.14

TRANSMISSION FRAME

TRANSMISSION SYMBOL

| SYNCHRONIZATION SYMBOL | DATA SYMBOL | ― | ) ( | DATA SYMBOL |

| SYNCHRONIZATION WAVEFORM | SYNCHRONIZATION WAVEFORM | | ) ( | SYNCHRONIZATION WAVEFORM |

(a)

| C1 | C2 | ⋯ | Cm |

(b)

| C1 | C1 | ⋯ | C1 | C2 | C2 | ⋯ | C2 | | ⋯ | ― | Cm | Cm | ⋯ | Cm |

N CHIPS     N CHIPS     N CHIPS

EP 1 618 696 B1

FIG.15A

FIG.15B

# FIG.16

(a)
PN SEQUENCE
SPECTRUM
RANGE

(b)
REPEATED CHIP
PN SEQUENCE
SPECTRUM
RANGE

(c)
REPEATED CHIP
PN SEQUENCE
SPECTRUM

(d)
LPF

(e)
SPECTRUM
AFTER LPF

Fc

WHOLE USABLE
FREQUENCY BAND

FIG.17A

TIME

FIG.17B

TIME

FIG.17C

TIME